(19) Europäisches Patentamt
European Patent Office
Office européen des brevets

(11) **EP 2 515 543 B1**

(12) **EUROPEAN PATENT SPECIFICATION**

(45) Date of publication and mention
of the grant of the patent:
**21.02.2018 Bulletin 2018/08**

(51) Int Cl.:
*H04N 9/04* *(2006.01)*     *H04N 5/355* *(2011.01)*

(21) Application number: **12164456.1**

(22) Date of filing: **17.04.2012**

(54) **Image capturing apparatus and image capturing method**

Vorrichtung und Verfahren zur Bilderfassung

Appareil et procédé de capture d'image

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.04.2011 JP 2011092336**

(43) Date of publication of application:
**24.10.2012 Bulletin 2012/43**

(73) Proprietor: **Ricoh Company, Ltd.
Tokyo 143-8555 (JP)**

(72) Inventors:
• **Okada, Daisuke
Ohta-ku
Tokyo 143-8555 (JP)**
• **Shiraishi, Kenji
Ohta-ku
Tokyo 143-8555 (JP)**

(74) Representative: **J A Kemp
14 South Square
Gray's Inn
London WC1R 5JJ (GB)**

(56) References cited:
**WO-A1-2011/042229     US-A1- 2006 221 201
US-A1- 2010 171 842     US-A1- 2011 001 841**

• **FRANCESCO BANTERLE ET AL: "A framework
for inverse tone mapping", THE VISUAL
COMPUTER ; INTERNATIONAL JOURNAL OF
COMPUTER GRAPHICS, SPRINGER, BERLIN,
DE, vol. 23, no. 7, 24 May 2007 (2007-05-24), pages
467-478, XP019515995, ISSN: 1432-2315, DOI:
10.1007/S00371-007-0124-9**

EP 2 515 543 B1

**Description**

FIELD OF THE INVENTION

The present invention relates to an image capturing apparatus and an image capturing method.

BACKGROUND OF THE INVENTION

Image capturing apparatuses that can expand a dynamic range have been known, one example of which is described in Japanese Patent Application Laid-open No. 2009-089355. The image capturing apparatus described in Japanese Patent Application Laid-open No. 2009-089355 expands the dynamic range by prediction and interpolation in the following manner. When an output from a pixel provided with a G filter out of outputs from pixels each provided with an R/G/B primary color filter is determined to exceed a predetermined saturation level, the pixel output value in a range beyond the saturation level is predicted and interpolated on the basis of the unsaturated outputs from a pixel provided with an R filter and a pixel provided with a B filter that are disposed around the pixel provided with the G filter.

The image capturing apparatus described in Japanese Patent Application Laid-open No. 2009-089355 can expand the dynamic range through one-time image capturing as compared with a method for obtaining an image having an expanded dynamic range by combining a plurality of images taken under varied exposure amounts. As a result, no motion blur occurs even when a subject to be captured is a moving object and a high-quality image can be taken without underexposure or overexposure.

The technique described in Japanese Patent Application Laid-open No. 2009-089355, however, may lose a chroma balance in RGD data after being corrected because only the G component of the received RGB data is corrected.

Therefore, there is a need for an image capturing apparatus and an image capturing method that can expand a dynamic range through one-time image capturing without losing a chroma balance.

US 2010/0171842 A1 discloses an imaging apparatus that include: an image sensor; a pixel output judging processor which judges that at least one of a pixel output of a pixel of a color other than the specific color in the vicinity of the pixel of the specific color reaches a predetermined judging level; a pixel output of the pixel of the specific color and a bit compression convertor which performs a bit compression such that pixel output data which is once converted from a first bit number to a second bit number is converted into the first bit number, wherein the bit compression converter performs the bit compression on the pixel output data per segment based on a bit compression characteristic respectively set in accordance with the calculated pixel output distribution per segment.

WO 2011/042229 A1 discloses a method for transforming an image from a Low Dynamic Range (LDR) image obtained with a given camera to a High Dynamic Range (HDR) image, the method comprising: - obtaining the exposure - pixel response curve for said given camera, converting the LDR image to HSB color space arrays, said HSB color space arrays including Hue array, a Saturation array and a Brightness array; and determining a Radiance array by inverse mapping each pixel in said Brightness array using the inverse of the exposure - pixel response curve.

US 2011/0001841 A1 discloses an imaging apparatus and an imaging method which can obtain an image in which a dynamic range is expanded at one shooting are provided. In a case where a pixel output of a pixel where a specific color separation filter is places is equal to or more than a predetermined saturation level, based on a pixel output of a pixel which is places in the vicinity of the pixel where the specific color separation filter is places, a pixel output for brightness, where the pixel output becomes equal to or more than the predetermined saturation level, of the pixel where the color separation filter of the specific color is places and the pixel output is equal to or more than the predetermined saturation level is compensated, and thereby a dynamic range of an image sensor is expanded.

F. Banterle et al: A framework for inverse tone mapping, published in The visual computer, International journal of computer graphic, volume 23, number 7, discloses the problem of color consistency of tone mapping operators.

SUMMARY OF THE INVENTION

It is an object of the present invention to at least partially solve the problem in the conventional technology.

According to an embodiment, there is provided an image capturing apparatus that includes an image capturing device configured to convert a subject image received on a light receiving surface through an optical system to an electrical signal, the light receiving surface having a plurality of pixels, the image capturing device being provided with a color separation filter made up of filters of multiple colors disposed in front of the respective pixels of the light receiving surface a correction coefficient calculation unit configured to calculate a correction coefficient when an output value of a first pixel disposed with a first filter of a specific color among the multiple colors reaches a saturation level, the correction coefficient being calculated using an output value of a second pixel being around the first pixel and disposed with a second filter of a color other than the specific color and a ratio between a sensitivity characteristic of the first filter and a sensitivity characteristic of the second filter; a first conversion unit configured to convert RGB data into a YUV data having luminance data and color different data, the RGB data including the output value of the first pixel and the output value of the second pixel; a correction processing unit configured to multiply the luminance data of the YUV data by the correction coefficient and expand the luminance data from data of a first bit number to data of a second bit number; and a tone compression unit configured to compress the expanded luminance data to data of the first bit number.

According to another embodiment, there is provided an image capturing method executed in an image capturing apparatus that includes an image capturing device configured to convert a subject image received on a light receiving surface through an optical system into an electrical signal, the light receiving surface having a plurality of pixels, the image capturing device being provided with a color separation filter made up of filters of multiple colors disposed in front of the respective pixels of the light receiving surface. The image capturing method includes calculating a correction coefficient when an output value of a first pixel disposed with a first filter of a specific color among the multiple colors reaches a saturation level, the correction coefficient being calculated using an output value of a second pixel being around the first pixel and disposed with a second filter of a color other than the specific color and a ratio between a sensitivity characteristic of the first filter and a sensitivity characteristic of the second filter; converting RGB data into YUV data having luminance data and color difference data, the RGB data including the output value of the first pixel and the output value of the second pixel; multiplying the luminance data of the YUV data by the correction coefficient and expanding the luminance data from data of a first bit number to data of a second bit number; and compressing the expanded luminance data to data of the first bit number.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

Fig. 1A is a top view of a digital camera;
Fig. 1B is a front view of the digital camera;
Fig. 1C is a rear view of the digital camera;
Fig. 2 is a block diagram illustrating an exemplary structure of a control system of the digital camera;
Fig. 3 is a schematic explaining color separation filters with Bayer arrangement;
Fig. 4 is a schematic illustrating a relationship between a pixel output value and a sensitivity difference in colors of the color separation filters;
Fig. 5 is a schematic illustrating an exemplary capturing setting screen displayed on a liquid crystal display (LCD) monitor by pressing a menu switch;
Fig. 6 is a block diagram illustrating an internal functional structure of a second charge-coupled device (CCD) signal processing block;
FIG. 7 is a block diagram illustrating the detail of a dynamic range (D range) expansion processing unit;
Fig. 8 illustrates exemplary conversion characteristics used for compressing luminance (Y) data by a tone compression unit;
Fig. 9 is a schematic explaining another example of a unit pixel block;
Fig. 10 illustrates examples of a histogram produced by a luminance histogram generation unit according to a second embodiment of the present invention;
Fig. 11 illustrates screen transition of the capturing setting screen displayed on the LCD monitor;
Fig. 12 illustrates examples of the histogram produced by the luminance histogram generation unit according to a third embodiment of the present invention; and
Fig. 13 illustrates examples of the histogram produced by the luminance histogram generation unit according to a fourth embodiment of the present invention.

DETAILED DESCRIPTION OF THE PREFERRED EMBODIMENTS

Embodiments of an image capturing apparatus and an image capturing method according to the invention are described in detail below with reference to the accompanying drawings. In the following embodiments, the invention is applied to a digital still camera (hereinafter, simply referred to as a digital camera). The invention, however, can be applied to various image capturing apparatuses provided with image capturing devices having color separation filters of a plurality of colors arranged on the fronts of pixels of light receiving surfaces.

First Embodiment

Structure of digital camera

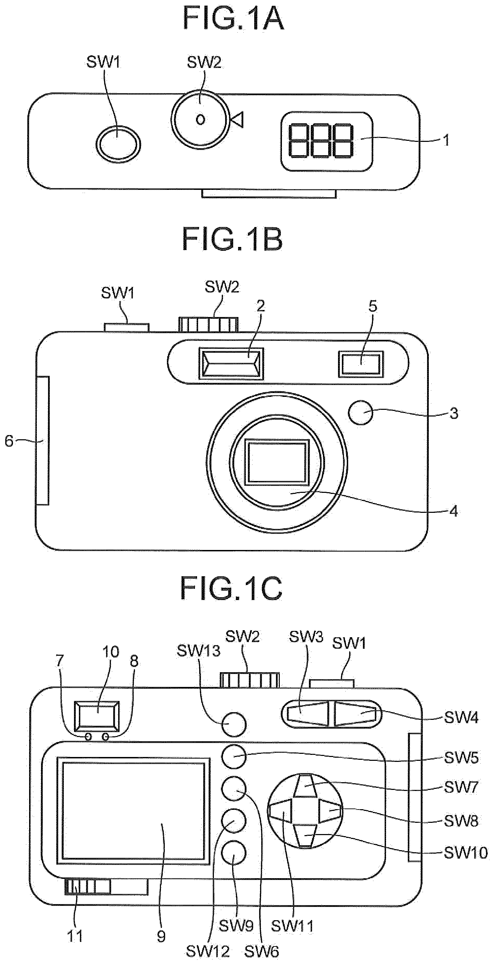

Figs. 1A to 1C are schematics illustrating an exemplary outer appearance of the digital camera according to a first embodiment of the present invention. Fig. 1A is a top view of the digital camera. Fig. 1B is a front view of the digital camera. Fig. 1C is a rear view of the digital camera.

As illustrated in Fig. 1A, the digital camera according to the first embodiment includes a sub liquid crystal display (hereinafter, referred to as the "LCD") 1, a release shutter SW1, and a mode dial SW2. The sub LCD 1 displays the number of still images that can be taken, for example, on its upper surface. The release shutter SW1 is pressed to take a still image. The mode dial SW2 is operated to switch various modes, such as recording (capturing) mode by which an image is recorded, a playback mode by which a recorded image is reproduced, and a SETUP mode by which setting conditions of the camera are set.

As illustrated in Fig. 1B, the digital camera according to the first embodiment is provided with a strobe light unit 2 that emits strobe light, a remote controller light receiver 3 that receives an infrared signal from a remote controller terminal (not illustrated), a lens barrel unit 4, and an optical finder (front) 5. The digital camera according to the first embodiment is provided with a memory card slot into which a memory card, which is described later, is inserted and a battery housing that houses a battery, on the side surface of the digital camera. The memory card slot and the battery housing are covered by a cover 6.

As illustrated in Fig. 1C, the digital camera according to the first embodiment is provided with an automatic focus light-emitting diode (AF LED) 7 that lights when the camera is in automatic focusing (AF) operation, a strobe LED 8 that lights when the strobe light unit emits strobe light, an LCD monitor 9 that displays various setting screens and reproduced images and is used as an electronic finder when images are taken, an optical finder (rear) 10, and a power switch 11, on the rear of the digital camera.

On the rear of the digital camera according to the first embodiment, switches SW3, SW4, SW5, SW6, SW7, SW8, SW9, SW10, SW11, SW12, and SW13 are disposed. The zoom (WIDE) switch SW3 is operated in wide angle zooming. The zoom (TELE) switch SW4 is operated in telephoto zooming. The self-timer set/cancel switch SW5 is operated in self-timer operation. The menu switch SW6 is operated when menu is selected. The up/strobe switch SW7 is operated in strobe mode switching (e.g., an automatic mode, a forced lighting mode, and a red-eye reduction mode) and when a cursor on the LCD monitor 9 is moved upward. The right switch SW8 is operated when the cursor on the LCD monitor 9 is moved rightward. The down/macro switch SW10 is operated in macro capturing and when the cursor on the LCD monitor 9 is moved downward. The left/image confirmation switch SW11 is operated when a taken image is confirmed on the LCD monitor 9 and when the cursor on the LCD monitor 9 is moved leftward. The confirmation (OK) switch SW12 is operated when selected items are determined. The quick access switch SW13 is operated when a registered menu is selected.

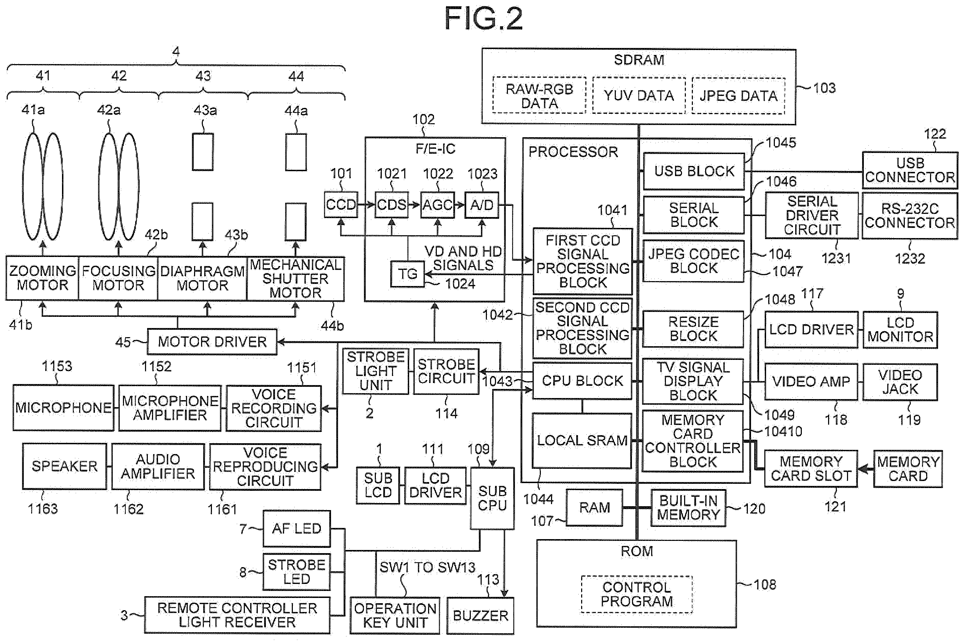

Fig. 2 is a block diagram illustrating an exemplary structure of a control system of the digital camera according to the first embodiment. The digital camera according to the first embodiment includes a charge-coupled device (CCD) 101, a front/end (F/E)-IC 102, and a digital still camera processor (hereinafter, simply referred to as a "processor") 104. The CCD 101 converts light input through the lens barrel unit 4 into an electrical signal by photoelectric conversion and outputs the electrical signal. The F/E-IC 102 processes the analog electrical signal output from the CCD 101 as preprocessing and outputs the processed signal as a digital signal. The processor 104 processes the digital signal from the F/E-IC 102 and executes and controls various types of operation of the digital camera.

The lens barrel unit 4 includes a zooming optical system 41 composed of a zooming lens 41a and a zooming motor 41b, a focusing optical system 42 composed of a focusing lens 42a and a focusing motor 42b, a diaphragm unit 43 composed of a diaphragm 43a and a diaphragm motor 43b, a mechanical shutter unit 44 composed of a mechanical shutter 44a and a mechanical shutter motor 44b, and a motor driver 45 that drives the motors. The motor driver 45 is driven and controlled by a driving command from a CPU block 1043, which is described later, included in the processor 104.

The CCD 101 is a solid image capturing device that receives light input through the lens barrel unit 4, converts the optical image into image data corresponding to the optical image by photoelectric conversion, and outputs the image data. Although the digital camera according to the first embodiment uses the CCD 101 as the image capturing device, other image capturing devices such as complementary metal-oxide semiconductor (CMOS) image sensors may be used instead of the CCD 101.

The F/E-IC 102 includes a correlated double sampler (CDS) 1021, an automatic gain controller (AGC) 1022, an analog-to-digital converter (A/D) 1023, and a timing generator (TG) 1024. The CDS 1021 performs correlated double sampling for image noise removal. The AGC 1022 performs gain control. The A/D 1023 converts an analog signal into a digital signal. The TG 1024 generates driving timing signals for the CCD 101, the CDS 1021, the AGC 1022, and the A/D 1023 on the basis of a vertical synchronizing signal (VD signal) and a horizontal synchronizing signal (HD signal) supplied by a first CCD signal processing block 1041, which is described later, included in the processor 104. The CPU block 1043 included in the processor 104 controls operation of components of the F/E-IC 102.

The processor 104 includes the first CCD signal processing block 1041, a second CCD signal processing block 1042, the CPU block 1043, a local static random access memory (SRAM) 1044, a universal serial bus (USB) block 1045, a serial block 1046, a joint photographic experts group (JPEG) coder/decoder (CODEC) block 1047, a RESIZE block 1048, a television (TV) signal display block 1049, and a memory card controller block 10410. The components included in the processor 104 are connected each other by a bus line.

The first CCD signal processing block 1041 supplies the VD and HD signals controlling timing of image data to the TG 1024 and takes in image data (RAW-RGB data) from the F/E-IC 102. The second CCD signal processing block 1042 performs, on the received RAW-RGB data, various processing such as dynamic range expansion processing, white balance control, and gamma correction (tone conversion), and converts the received RAW-RGB data into data in YUV format (YUV data). The YUV data is composed of luminance (Y) data and color differences (U, which is a difference between the luminance data (Y) and blue (B) component data, and V, which is a difference between the luminance data (Y) and red (R) component data) and expresses an image.

The CPU block 1043 controls operation of the components of the digital camera according to the first embodiment. Specifically, the CPU block 1043 controls voice recording operation performed by a voice recording circuit 1151. The voice recording circuit 1151 records a voice signal, which is converted by a microphone 1153 and amplified by a microphone amplifier 1152, in accordance with a command from the CPU block 1043. The CPU block 1043 controls voice reproducing operation performed by a voice reproducing circuit 1161. The voice reproducing circuit 1161 reproduces a voice signal recorded in an appropriate memory, inputs the reproduced signal to an audio amplifier 1162, and causes a speaker 1163 to output a voice in accordance with a command from the CPU block 1043. The CPU block 1043 controls operation of a strobe circuit 114 so as to cause the strobe light unit 2 to emit light for lighting.

The CPU block 1043 is coupled to a sub CPU 109 disposed outside the processor 104. The sub CPU 109 controls display of the sub LCD 1 through an LCD driver 111. The sub CPU 109 is coupled to an operation key unit composed of the AF LED 7, the strobe LED 8, the remote controller light receiver 3, a buzzer 113, and the switches SW1 to SW13. The sub CPU 109 receives an output signal from the operation key unit or the remote controller light receiver 3 as user operation information, and controls the operation of the AF LED 7, the strobe LED 8, and the buzzer 113 in accordance with the user operation information. In addition, the sub CPU 109 transfers the user operation information to the CPU block 1043 in the processor 104.

The local SRAM 1044 is a memory that temporarily stores therein data necessary for control, for example. The USB block 1045 performs USB communications between itself and an external apparatus such as a computer terminal connected to a USB connector 122. The serial block 1046 performs serial communications, through a serial driver circuit 1231, between itself and an external apparatus, such as a computer terminal, connected to a recommended standard 232 version c (RS-232C) connector 1232.

The JPEG CODEC block 1047 compresses taken image data into JPEG format and decompresses data of a recorded image compressed into JPEG format (JPEG data). The RESIZE block 1048 enlarges or reduces the image data size by interpolation.

The TV signal display block 1049 converts the image data into a video signal used for displaying the image on the LCD monitor 9 or an external display apparatus such as a television set. The TV signal display block 1049 is coupled to an LCD driver 117. The LCD driver 117 drives the LCD monitor 9 so as to display the image. The TV signal display block 1049 is coupled to a video amplifier (AMP) 118. When an external display apparatus such as a television set is connected to a video jack 119, the image is displayed on the external display apparatus.

The memory card controller block 10410 is coupled to a memory card slot 121. The memory card controller block 10410 controls a memory card inserted into the memory card slot 121 or a universal personal computer memory card international association (PCMCIA) slot, for example.

A synchronous dynamic random access memory (SDRAM) 103, a random access memory (RAM) 107, a read only memory (ROM) 108, and a built-in memory 120 are arranged outside the processor 104 and are coupled to the processor 104 through the bus line.

The SDRAM 103 is a memory that stores therein image data temporarily when the processor 104 performs image processing. Examples of the stored image data include the RAW-RGB data taken in by the first CCD signal processing block 1041 from the F/E-IC 102, the YUV data converted by the second CCD signal processing block 1042 in YUV format, and the JPEG data compressed by the JPEG CODEC block 1047 in JPEG format.

The ROM 108 stores therein a control program written in a code readable by the CPU block 1043 and control parameters. The control parameters may be stored in the built-in memory 120. Upon turning on the power source of the digital camera, the program is loaded into a main memory (not illustrated). The CPU block 1043 controls the operation of the components of the digital camera in accordance with the program and temporarily stores data necessary for control in the RAM 107 and the local SRAM 1044 in the processor 104. The use of a rewritable flash ROM as the ROM 108 enables the control program and the control parameters to be changeable. As a result, the functions can be easily upgraded.

The built-in memory 120 is used for recording taken image data when no memory card is inserted into the memory card slot 121. The RAM 107 is used as a working area when the CPU block 1043 executes the control program.

Schematic operation of digital camera

Schematic operation of the digital camera thus structured is described below. The digital camera according to the first embodiment has operation modes such as a capturing mode by which a still image is taken and recorded, and a playback mode by which a recorded image is reproduced. The operation modes are switched by the operation of the mode dial SW2.

Once a user sets the mode dial SW2 as the capturing mode and turns on the power switch 11, the digital camera is activated in the capturing mode. Once the digital camera is activated in the capturing mode, the CPU block 1043, which executes the control program stored in the ROM 108, outputs a control signal to the motor driver 45, and the lens barrel unit 4 moves to a position at which images can be taken. The CCD 101, the F/E-IC 102, and the processor 104 are also activated. As a result, the digital camera is ready for taking images.

In this state, when the user trains the lens barrel unit 4 on a subject to be captured, a subject image is formed on a light receiving surface having a plurality of pixels of the CCD 101, converted into an electrical signal, and output from the CCD 101. The electrical signal (an analog RGB image signal) output from the CCD 101 is converted into the RAW-RGB data of 12 bits (a tone value expressed by 12 bits per pixel output value) by the A/D 1023 in the F/E-IC 102.

The RAW-RGB data is taken in the first CCD signal processing block 1041 of the processor 104 and stored in the SDRAM 103. The RAW-RGB data read out from the SDRAM 103 is converted into the YUV data in YUV format, by which images can be displayed, by the second CCD signal processing block 1042. The YUV data is stored in the SDRAM 103.

The YUV data read out from the SDRAM 103 is sent to the LCD driver 117 through the TV signal display block 1049. As a result, the image is displayed on the LCD monitor 9. During monitoring, in which the LCD monitor 9 displays an image, one frame is read out every 1/30 seconds in accordance with pixel-thinning processing performed by the first CCD signal processing block 1041. The term "monitoring" means the state in which an image is displayed on the LCD monitor 9 functioning as the electronic finder and the user does not yet operates the release shutter SW1.

The user can determine the composition, for example, while viewing the subject image displayed on the LCD monitor 9. The YUV data is sent to the video AMP 118 from the TV signal display block 1049. When the video jack 119 is coupled to an external display apparatus such as a television set through a cable, for example, the image can be displayed on the external display apparatus.

The first CCD signal processing block 1041 calculates an automatic focusing (AF) evaluation value, an automatic exposure (AE) evaluation value, and an automatic white balance (AWB) evaluation value using the RAW-RGB data taken in into the processor 104.

The AF evaluation value is calculated using an integrated value of an output of a high frequency component extraction filter and an integrated value of a luminance difference between adjacent pixels, for example. When a subject image is in a focusing state, the maximum of the frequency component is included in the subject image because the edge of the subject is clear. In the AF operation (in operation to detect a focus position), the AF evaluation value is acquired at every position while the focusing lens 42a of the focusing optical system 42 is being moved in an optical axis direction and a position at which the maximum of the frequency component is detected is determined as the focus position.

The AE evaluation value and the AWB evaluation value are calculated using each integrated value of the RGB value (pixel output value) of the RAW-RGB data. For example, a screen corresponding to all pixels of the CCD 101 is equally divided into 256 areas (16 horizontal areas and 16 vertical areas) and an RGB integrated value of each area is calculated. The CPU block 1043, which executes the control program stored in the ROM 108, reads the calculated RGB integrated value, calculates the luminance of each area in the screen, and determines an appropriate exposure amount on the basis of a luminance distribution, in the AE processing. Exposure conditions (e.g., the number of releases of the electronic shutter of the CCD 101 and an aperture value of the diaphragm 43a) are set on the basis of the determined exposure amount. In the AWB processing, control values corresponding to the color of the light source lighting a subject are determined on the basis of the RGB distribution. When the second CCD signal processing block 1042 converts the RAW-RGB data into the YUV data, a proper white balance is adjusted by the AWB processing. The AE processing and the AWB processing are continuously performed while the monitoring processing is performed.

When the release shutter SW1 is pressed (from half-pressed to fully-pressed) in the monitoring operation, still image capturing operation starts, the AF operation serving as the focus position detection operation is performed, and the still image recording processing is performed. Specifically, the CPU block 1043, which executes the control program stored in the ROM 108, sends a driving command to the motor driver 45. As a result, the focusing lens 42a moves to the focus position. When the subject image is focused, the AE processing is performed. When the exposure starts, the CPU block 1043 sends a driving command to the motor driver 45. As a result, the mechanical shutter 44a is closed.

Then, the CCD 101 outputs the analog RGB image signal for a still image. The A/D 1023 of the F/E-IC 102 converts the analog RGB image signal into the RAW-RGB data.

The RAW-RGB data is taken in by the first CCD signal processing block 1041 of the processor 104, converted into the YUV data by the second CCD signal processing block 1042, and stored in the SDRAM 103. The YUV data is read out from the SDRAM 103, converted into a size corresponding to the number of recording pixels by the RESIZE block 1048, and compressed to the JPEG data by the JPEG CODEC block 1047. The compressed JPEG data is written in the SDRAM 103 and thereafter stored in a medium such as a memory card inserted into the memory card slot 121 through the memory card controller block 10410.

Dynamic range expansion processing

The second CCD signal processing block 1042 of the digital camera according to the first embodiment has a dynamic range expansion function that expands the dynamic range.

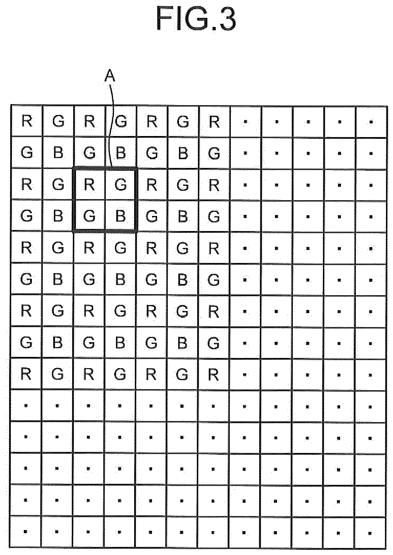

As illustrated in Fig. 3, color separation filters of RGB with Bayer arrangement are disposed on the pixels included in the CCD 101 of the digital camera. The color separation filters, which are R, G, and B filters, arranged in Bayer arrangement have different luminance sensitivities from each other with respect to light having a wide wavelength range such as sunlight. In the first embodiment, the following description is made on the assumption that G (green) filters have the luminance sensitivity approximately twice as high as the luminance sensitivity of R (red) filters and B (blue) filters.

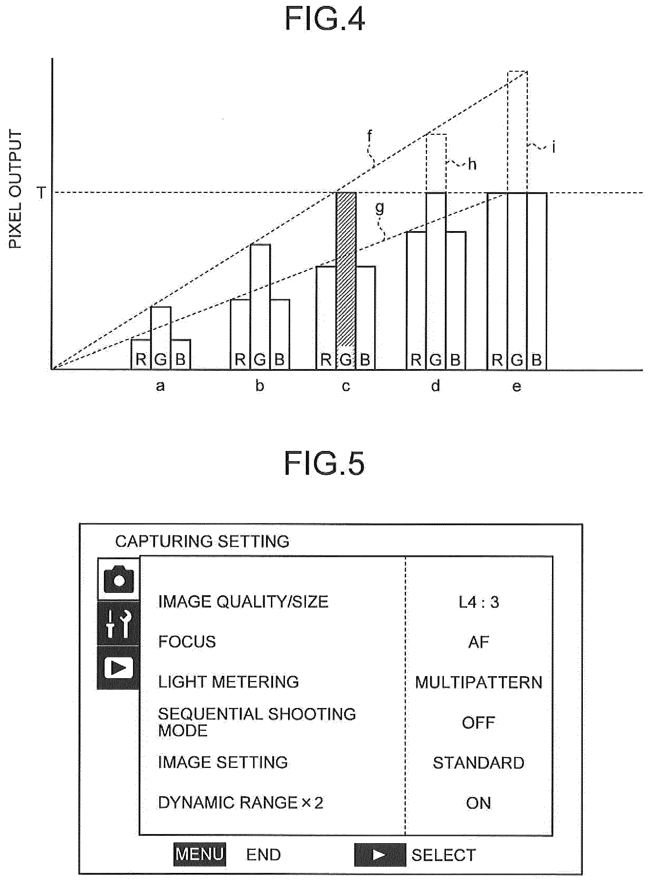

Fig. 4 is a schematic illustrating a relationship between the pixel output value and the sensitivity difference in colors of the color separation filters. In Fig. 4, the pixel output value of each of the RGB when light having a wide wavelength range such as sunlight is incident on the color separation filters is illustrated with a, b, c, d, and e. The incident light amount increases in the order from a to e. In Fig. 4, T indicates a saturation level of a pixel output value, f indicates a sensitivity characteristic of G filters, and g indicates each sensitivity characteristic of R and B filters.

As illustrated in Fig. 4 with the hatched area above the indication c, a pixel output value of a pixel on which a G filter is disposed (hereinafter, referred to as the "G pixel") reaches the saturation level T before a pixel output value of a pixel on which an R filter is disposed (hereinafter, referred to as the "R pixel") and a pixel output value of a pixel on which a B filter is disposed (hereinafter, referred to as the "B pixel") reach the saturation level T when light having a wide wavelength range such as sunlight is incident on the color separation filters. When the dynamic range is set corresponding to the range (from the indications a to c in Fig. 4) until the pixel output value of the G pixel having a high sensitivity reaches the saturation level T, the R pixel output value and the B pixel output value are limited to approximately half the saturation level T.

The digital camera according to the first embodiment expands the dynamic range in the following manner even when the pixel output value of the G pixel having a high sensitivity exceeds the saturation level T. The digital camera calculates a correction coefficient using the pixel output values of the R and B pixels, and a ratio between the sensitivity characteristic of the G filter and the sensitivity characteristics of the R and B filters, and multiplies the luminance (Y) data of the YUV data converted from the RAW-RGB data by the correction coefficient. As a result, in the resulting data, the pixel output value beyond the saturation level T of the G pixel is virtually predicted and interpolated. In Fig. 4, areas indicated with h and i correspond to the tone values that are predicted and interpolated as those beyond the saturation level T of the G pixel.

The dynamic range expansion processing executed by the second CCD signal processing block 1042 is describe in detail below. In the digital camera according to the first embodiment, a capturing setting screen is displayed on the LCD monitor 9 as illustrated in Fig. 5, for example, when a user presses the menu switch SW6. When the user selects the item "Dynamic Range x2" from the display screen, the CPU block 1043 outputs a control signal to the second CCD signal processing block 1042, and the second CCD signal processing block 1042 executes processing to double the dynamic range.

For example, when the background of a subject includes an extremely bright area, a user decides to press the menu switch SW6 and select the item "Dynamic Range x2". As a result, the dynamic range expansion processing is executed. In the first embodiment, the sensitivity of the G filter is approximately twice as high as each sensitivity of the R and B filters as described above. The pixel output value of the R pixel or the B pixel may be saturated before that of the G pixel is saturated under extreme lightning of red or blue. The tone and colors are not correctly reproduced when the dynamic range expansion processing is performed under such lighting. In such a case, the item "Dynamic Range x2" is not selected by user judgment.

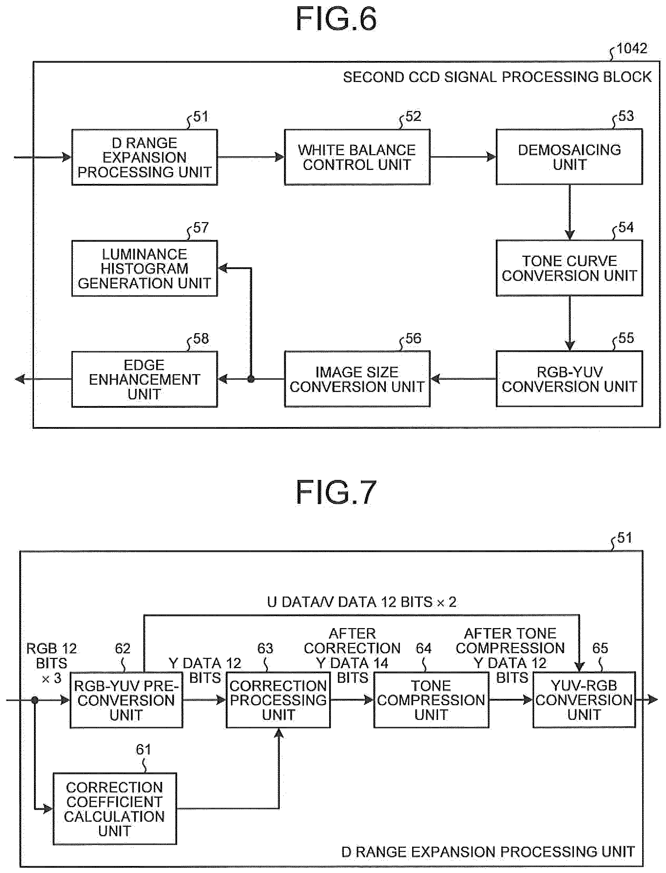

Fig. 6 is a block diagram illustrating an internal functional structure of the second CCD signal processing block 1042. As illustrated in Fig. 6, the second CCD signal processing block 1042 includes a dynamic range expansion processing unit (hereinafter, referred to as a "D range expansion processing unit") 51, a white balance control unit 52, a demosaicing unit 53, a tone curve conversion unit 54, an RGB-YUV conversion unit 55, an image size conversion unit 56, a luminance histogram generation unit 57, and an edge enhancement unit 58.

The D range expansion processing unit 51 receives the RAW-RGB data, executes the dynamic range expansion processing, and outputs the processed RGB data to the white balance control unit 52. The details of the D range expansion processing unit 51 is described later.

The white balance control unit 52 amplifies the RGB value of the received RGB data. Meanwhile, the CPU block 1043 calculates a correction value for adjusting the white balance on the basis of the AWB evaluation value calculated by the first CCD signal processing block 1041 and outputs the calculated correction value to the white balance control unit 52. The white balance control unit 52 adjusts the white balance on the basis of the received correction value.

The demosaicing unit 53 performs interpolation arithmetic processing on the data of one color of RGB for one pixel and produces all the data of RGB for one pixel.

The tone curve conversion unit 54 performs gamma conversion, which converts the RGB data of 12 bits per pixel to the RGB data of 8 bits per pixel, and outputs the converted RGB data to the RGB-YUV conversion unit 55.

The RGB-YUV conversion unit 55 converts the received RGB data (8 bits) into the YUV data by matrix arithmetic and outputs the YUV data to the image size conversion unit 56.

The image size conversion unit 56 reduces or enlarges the received YUV data (8 bits) to a desired image size and outputs the resulting YUV data to the luminance histogram generation unit 57 and the edge enhancement unit 58.

The luminance histogram generation unit 57 produces a luminance histogram using the received YUV data.

The edge enhancement unit 58 performs edge enhancement on the received YUV data in accordance with the image and stores the processed YUV data in the SDRAM 103.

Fig. 7 is a block diagram illustrating the detail of the D range expansion processing unit 51. As illustrated in Fig. 7, the D range expansion processing unit 51 includes a correction coefficient calculation unit 61, an RGB-YUV pre-conversion unit 62, which may be referred to as a first conversion unit, a correction processing unit 63, a tone compression unit 64, and a YUV-RGB conversion unit 65, which may be referred to as a second conversion unit.

The RAW-RGB data is input to the correction coefficient calculation unit 61 and the RGB-YUV pre-conversion unit 62.

The correction coefficient calculation unit 61 detects the pixel output values of the R, G, and B pixels from the received RAW-RGB data and determines whether the pixel output value of the G pixel reaches the saturation level T. The correction coefficient calculation unit 61 makes determination on the basis of a processing unit of $2 \times 2$ pixels indicated with the heavy line A in Fig. 3, for example. The processing unit that is a set of the two G pixels and each of the R and B pixels is referred to as a "unit pixel block" hereinafter. That is, the correction coefficient calculation unit 61 determines whether the pixel output value of the G pixel included in the unit pixel block reaches the saturation level T. When the pixel output value of the G pixel reaches the saturation level T, the correction coefficient calculation unit 61 calculates the correction coefficient, which is described later, on the basis of the pixel output values of the R and B pixels included in the unit pixel block, and the ratio between the sensitivity characteristic of the G filter and the sensitivity characteristics of the R and B filters. When the pixel output value of the G pixel does not reach the saturation level T, the correction coefficient calculation unit 61 sets the correction coefficient as "1".

The RGB-YUV pre-conversion unit 62 converts, for each unit pixel block, the received RAW-RGB data into the YUV data composed of the luminance (Y) data and the color difference (U and V) data. In this way, the RGB-YUV pre-conversion unit 62 of the D range expansion processing unit 51 converts the RAW-RGB data into the YUV data as the preliminary stage before the RGB-YUV conversion unit 55 of the second CCD signal processing block 1042 converts the RGB data into the YUV data as described above. The YUV data converted by the RGB-YUV pre-conversion unit 62 is separated into the luminance (Y) data and the color difference (U and V) data. The luminance (Y) data is input to the correction processing unit 63 while the color difference (U and V) data is input to the YUV-RGB conversion unit 65.

The correction processing unit 63 corrects the luminance (Y) data by multiplying the luminance (Y) data input by the RGB-YUV pre-conversion unit 62 by the correction coefficient calculated by the correction coefficient calculation unit 61. Meanwhile, the correction processing unit 63 expands the luminance (Y) data of 12 bits to the luminance (Y) data of 14 bits because the size of the luminance (Y) data after the correction exceeds 12 bits (the maximum value is 4095). Specifically, the correction processing unit 63 deals with the luminance (Y) data as the data of 14 bits (also referred to as 14-bit data), the maximum value of which is set to 8190. The luminance (Y) data expanded to the 14-bit data after the correction is input to the tone compression unit 64.

When the correction coefficient calculated by the correction coefficient calculation unit 61 is "1", which indicates that the pixel output value of the G pixel included in the unit pixel block does not reach the saturation level T, the correction processing unit 63 maintains the tone value of the luminance (Y) data and deals with the luminance (Y) data as 14-bit data.

The tone compression unit 64 compresses the luminance (Y) data expanded to the 14-bit data (the maximum value is 8190) to the data of 12 bits (also referred to as 12-bit data) (the maximum value is 4095) in accordance with a bit compression conversion characteristic, which is described later. The luminance (Y) data compressed to the 12-bit data by the tone compression unit 64 after the correction is input to the YUV-RGB conversion unit 65.

The YUV-RGB conversion unit 65 converts the YUV data, which is composed of the luminance (Y) data input by the tone compression unit 64 and the color difference (U and V) data input by the RGB-YUV pre-conversion unit 62, into the RGB data. The tone value of the color difference (U and V) data included in the YUV data before being converted remains unchanged as the original tone value because the color difference data is input to the YUV-RGB conversion unit 65 without passing through the correction processing unit 63 and the tone compression unit 64. Accordingly, the luminance value of the G component, which dominates the luminance (Y) data, is mainly corrected in the RGB data after the conversion. A chroma balance among RGB of the converted RGB data is maintained at that of the RAW-RGB data input to the D range expansion processing unit 51. That is, the above-described structure can expand the dynamic range without losing the chroma balance.

Calculating correction coefficient

A specific example of calculating the correction coefficient by the correction coefficient calculation unit 61 is described below. The correction coefficient calculation unit 61 calculates a correction coefficient K using the following Equation (1), for example.

$$K = [l \times f(Ro) + m \times f(Go) + n \times f(Bo)]/3 \qquad (1)$$

where 1, m, and n are the coefficients set in accordance with the ratio among sensitivity characteristics of the R, G, and B filters, and f(Ro), f(Go), and f(Bo) are the coefficients set by the following Equation (2) to Equation (4).

$$f(Ro) = 1, \text{ if } Ro \leq TR$$
$$f(Ro) = Ro/TR, \text{ if } Ro > TR \qquad (2)$$

where Ro is the pixel output value of the R pixel and TR is a saturation judgment level set for the pixel output value of the R pixel.

$$f(Go) = 1, \text{ if } Go \leq TG$$
$$f(Go) = Go/TG, \text{ if } Go > TG \qquad (3)$$

where Go is the pixel output value of the G pixel and TG is a saturation judgment level set for the pixel output value of the G pixel.

$$f(Bo) = 1, \text{ if } Bo \leq TB$$
$$f(Bo) = Bo/TB, \text{ if } Bo > TB \qquad (4)$$

where Bo is the pixel output value of the B pixel and TB is a saturation judgment level set for the pixel output value of the B pixel.

The saturation judgment levels TR, TG, and TB in Equation (2) to Equation (4) are set in accordance with the respective sensitivity characteristics of the R, G, and B filters. In the first embodiment, the sensitivity of the G filter is approximately twice as high as each sensitivity of the R and B filters as described above. Accordingly, the saturation judgment level TG is the value of the pixel output value of the G pixel when the pixel output value of the G pixel reaches the saturation level T while each of the saturation judgment levels TR and TB is set half the saturation judgment level TG. In this case, the correction coefficient K that predicts and interpolates the pixel output value of the G pixel is calculated by setting 3/2 to the coefficients 1 and n, and 0 (zero) to the coefficient m in Equation (1). The luminance (Y) data, in which the G component dominates, of the YUV data is multiplied by the correction coefficient K. As a result, the dynamic range can be expanded by virtually interpolating the pixel output value of the G pixel without losing the chroma balance.

In Equation (2) to Equation (4), f(Ro), f(Go), and f(Bo) are set to "1" when the pixel output values of the R, G, and B pixels do not reach the respective saturated judgment levels TR, TG, and TB. This is because that the value of the luminance (Y) data after the multiplication of the correction coefficient is prevented from being smaller than the original value. That is, it is intended that the value of the luminance (Y) data after the multiplication of the correction coefficient is equal to or larger than the value of the luminance (Y) data before the multiplication.

For example, there may be a case where the pixel output value of the G pixel in the unit pixel block reaches the saturation level T while the pixel output values of the R and B pixels located near the G pixel are extremely smaller than the pixel output value of the G pixel. In such a case, a problem arises in that the value of the luminance (Y) data after the multiplication of the correction coefficient is smaller than the original value of the luminance (Y) data while the pixel output value of the G pixel reaches the saturation level T, unless f(Ro), f(Go), and f(Bo) are set to "1" when the pixel output values of the R, G, and B pixels are smaller than the respective saturation judgment levels TR, TG, and TB. In order to address such a case, f(Ro), f(Go), and f(Bo) are set to "1" as illustrated in Equation (2) to Equation (4) when the pixel output values of the R, G, and B pixels are smaller than the respective saturation judgment levels TR, TG, and TB. As a result, the dynamic range expansion processing can be properly executed.

Conversion characteristic in tone compression

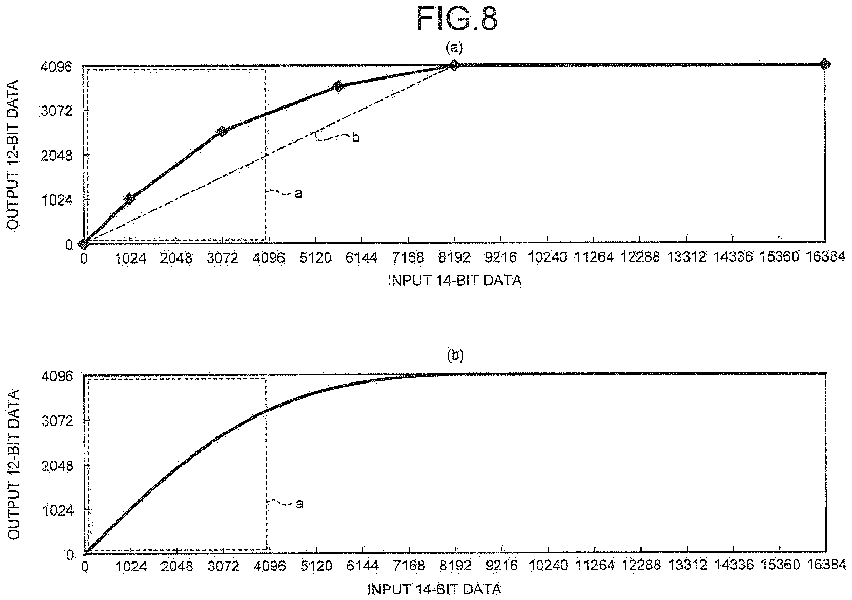

The conversion characteristic used for compressing the luminance (Y) data by the tone compression unit 64 is described below. The tone compression unit 64 compresses the luminance (Y) data expanded to 14-bit data to 12-bit data using a bit compression conversion characteristic as illustrated in (a) of Fig. 8, for example. The bit compression conversion characteristic is obtained by designating three nodes, connecting the nodes with straight lines so as to approximate the compression conversion characteristic as the broken line approximation including four zones. In (a) of Fig. 8, the range a indicates a 12-bit range of input data and the chain line b indicates a simple linear conversion characteristic to multiply the data having the maximum value 8190 by 1/2.

In the first embodiment, the tone compression unit 64 compresses 14-bit data to 12-bit data using the compression conversion characteristic having three nodes as illustrated with the solid line in (a) of Fig. 8. This conversion is used to obtain the following effects that cannot be obtained by the conversion using the simple linear conversion characteristic without nodes as illustrated with the chain line b in (a) of Fig. 8.

When the linear conversion characteristic illustrated in (a) of Fig. 8 as the chain line b is used, the tone value represented by 14-bit data is multiplied by 1/2 and compressed to 12-bit data in the range a in (a) of Fig. 8. Regarding the tone value, the 14-bit data has the tone value represented by the 12-bit data when the pixel output value of the G pixel does not reach the saturation level T and the luminance (Y) data of 12 bits is dealt with as the 14-bit data while the tone value of the luminance (Y) data is maintained. That is, the processing in which the tone value included in the 12-bit range indicated by a in (a) of Fig. 8 is multiplied by 1/2 and compressed to the 12-bit data, deteriorates tone property of images in a low to medium luminance level, causing the tone of the images to deteriorate.

In contrast, when the 14-bit data is compressed to the 12-bit data using the compression conversion characteristic illustrated in (a) of Fig. 8 as the solid line, the luminance (Y) data of 14 bits when the pixel output value of the G pixel reaches the saturation level T can be properly compressed to the 12-bit data while the continuity of the tone value of the luminance (Y) data is maintained, and the luminance (Y) data of 14 bits when the pixel output value of the G pixel does not reach the saturation level T can be restored as close to the original data of 12 bits as possible. As a result, the 14-bit data can be properly compressed to the 12-bit data while the tone property in the low to medium luminance level is maintained.

The compression conversion characteristic illustrated in (a) of Fig. 8 as the solid line allows the compression with the compression ratio given in the following manner. The compression ratio for the luminance (Y) data when the pixel output value of the G pixel does not reach the saturation level T is smaller than that for the luminance (Y) data when the pixel output value of the G pixel reaches the saturation level T. In addition, the compression ratio for the luminance (Y) data when the pixel output value of the G pixel does not reach the saturation level T causes the tone value of the luminance (Y) data to remain almost unchanged before and after being compressed. The compression from the 14-bit data to the 12-bit data using the compression conversion characteristic enables the 14-bit data to be properly compressed to the 12-bit data while the tone property in the low to medium luminance level is maintained.

The compression conversion characteristic illustrated in (a) of Fig. 8 as the solid line is the broken line approximation including four zones obtained by designating three nodes and connecting the nodes with straight lines. The number of zones is not particularly limited to a specific number. The compression conversion characteristic used for compressing the luminance (Y) data by the tone compression unit 64 is not limited to the broken line approximation as illustrated in (a) of Fig. 8. The compression conversion characteristic may be represented as the curve having no nodes as illustrated in (b) of Fig. 8. The compression conversion characteristic represented as a curve is obtained by setting the number of zones to 8192 from that of the conversion characteristic having four zones of (a) of Fig. 8. In (b) of Fig. 8, the range a indicates the 12-bit range of input data.

When the 14-bit data is compressed to the 12-bit data using the above-described compression conversion characteristic, the processing can be simply and properly performed by preparing a lookup table in which numeric data after the compression to the 12-bit data is in association with the received 14-bit data (from 0 to 8192).

The digital camera according to the first embodiment executes the following processing as described above in detail with specific examples. The correction coefficient calculation unit 61 of the D range expansion processing unit 51 calculates the correction coefficient using the pixel output values of the R and B pixels included in the unit pixel block and the ratio between the sensitivity characteristic of the G filter and the sensitivity characteristics of the R and B filters when the pixel output value of the G pixel included in the unit pixel block reaches the saturation level T. The RGB-YUV pre-conversion unit 62 converts the received RAW-RGB data into the YUV data. The correction processing unit 63 multiplies only the luminance (Y) data of the YUV data by the correction coefficient calculated by the correction coefficient calculation unit 61. The tone compression unit 64 compresses the luminance (Y) data expanded to 14-bit data to 12-bit data. The digital camera according to the first embodiment thus enables the dynamic range to be expanded without losing the chroma balance. As a result, the use of the digital camera can prevent the occurrence of overexposure and provide good tone property even when an area having a high luminance is included in the background of a taken image, for example.

The digital camera according to the first embodiment includes the YUV-RGB conversion unit 65 in the D range expansion processing unit 51. The YUV-RGB conversion unit 65 converts the YUV data in which only the luminance (Y) data is corrected into the RGB data. This structure enables the processing executed by the white balance control unit 52, the demosaicing unit 53, and the tone curve conversion unit 54, which follow the processing of the D range expansion processing unit 51, to be executed in the conventional manner, resulting in a digital camera having broad utility.

In the digital camera according to the first embodiment, the correction coefficient calculation unit 61 of the D range expansion processing unit 51 calculates the correction coefficient in such a manner that the value of the luminance (Y) after the multiplication of the correction coefficient is equal to or larger than that of the luminance (Y) before the multiplication of the correction coefficient. This calculation manner effectively avoids a problem that the value of the luminance (Y) after the multiplication of the correction coefficient is smaller than the original value of the luminance (Y) while the pixel output value of the G pixel reaches the saturation level T. As a result, the dynamic range expansion processing can be properly executed.

In the digital camera according to the first embodiment, the tone compression unit 64 of the D range expansion processing unit 51 performs compression in such a manner that the compression ratio for the luminance (Y) data when the pixel output value of the G pixel does not reach the saturation level T is smaller than that for the luminance (Y) data when the pixel output value of the G pixel reaches the saturation level T, and the compression ratio for the luminance (Y) data when the pixel output value of the G pixel does not reach the saturation level T causes the tone value of the luminance (Y) data to remain nearly unchanged before and after the compression. As a result, the compression from 14-bit data to 12-bit data can be properly executed while the tone property in the low to medium luminance level is maintained.

Modification

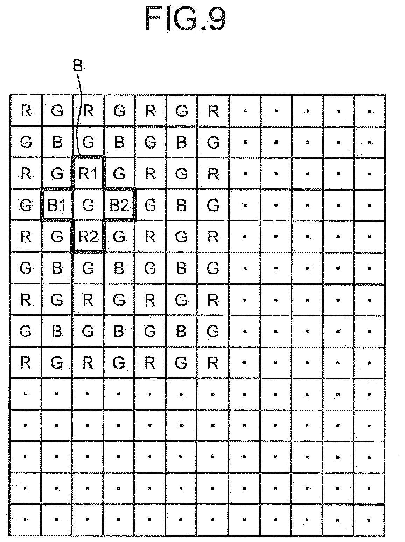

In the first embodiment, the set of $2 \times 2$ pixels indicated with the heavy line A in Fig. 3 is defined as the unit pixel block serving as the unit to be processed. The number of pixels included in the unit pixel block serving as the unit to be processed may be more than that of the first embodiment. For example, the unit pixel block may include the set of five pixels surrounded with the heavy line B in Fig. 9. The set is composed of a G pixel, two R pixels (R1 and R2), and two B pixels (B1 and B2). In this case, the correction coefficient calculation unit 61 calculates the correction coefficient as described above using the pixel output values of the R pixel and B pixel obtained by the following manner when the pixel output value of the G pixel included in the unit pixel block reaches the saturation level T. The average of the two R pixels (R1 and R2) included in the unit pixel block is used as the output value of the R pixel while the average of the two B pixels (B1 and B2) included in the unit pixel block is used as the output value of the B pixel.

The correction coefficient calculation unit 61 calculates the correction coefficient K using the following Equation (5), for example.

$$K = [l \times f(Ra) + m \times f(Ga) + n \times f(Ba)]/3 \tag{5}$$

where 1, m, and n are the coefficients set in accordance with the ratio among the sensitivity characteristics of the R, G, and B filters, and f(Ra), f(Ga), and f(Ba) are the coefficients set by the following Equation (6) to Equation (8).

$$f(Ra) = 1, \text{ if } Ra \leq TR$$
$$f(Ra) = Ra/TR, \text{ if } Ra > TR \tag{6}$$

where Ra is the average of the pixel output values of the R pixels included in the unit pixel block and TR is the saturation judgment level set for the pixel output value of the R pixel.

$$f(Ga) = 1, \text{ if } Ga \leq TG$$
$$f(Ga) = Ga/TG, \text{ if } Ga > TG \tag{7}$$

where Ga is the pixel output value of the G pixel included in the unit pixel block and TG is the saturation judgment level set for the pixel output value of the G pixel.

$$f(Ba) = 1, \text{ if } Ba \leq TB$$

$$f(Ba) = Ba/TB, \text{ if } Ba > TB \qquad\qquad (8)$$

where Ba is the average of the pixel output values of the B pixels included in the unit pixel block and TB is the saturation judgment level set for the pixel output value of the B pixel.

In the same manner as the first embodiment, when the sensitivity of the G filter is approximately twice as high as each sensitivity of the R and B filters, the saturation judgment level TG is the value of the pixel output value of the G pixel when the pixel output value of the G pixel reaches the saturation level T while each of the saturation judgment levels TR and TB is set half the saturation judgment level TG. In this case, the coefficients 1 and n are set to 3/2 while the coefficient m is set to 0 (zero). As a result, the correction coefficient K, which predicts and interpolates the pixel output value of the G pixel, can be calculated in the same manner as described above when the unit pixel block having a wide area is set.

The use of the unit pixel block having a wide area as the unit to be processed can reduce influences due to the sensitivity difference in the R and B pixels (other than the G pixel) included in the unit pixel block. As a result, the dynamic range expansion processing can be executed more correctly.

Second Embodiment

A digital camera according to a second embodiment of the present invention is described below. In the second embodiment, the expansion ratio of the dynamic range can be changed in accordance with user operation. The basic structure of the digital camera and the basic operation of the dynamic range expansion processing are the same as those of the first embodiment and the same descriptions as those of the first embodiment are omitted. The following description is made only on the features of the second embodiment.

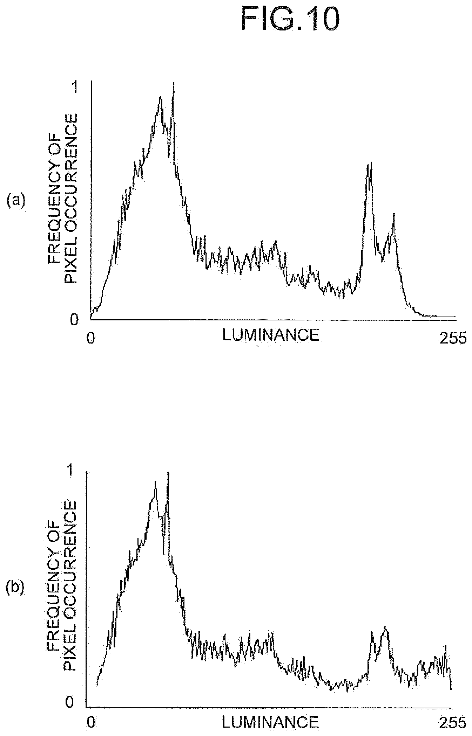

In (a) of Fig. 10, illustrated is an exemplary histogram produced by the luminance histogram generation unit 57 when the dynamic range expansion processing to double the dynamic range is executed on a taken image in which the pixel output value of the G pixel exceeds the saturation level T. In (b) of Fig. 10, illustrated is an exemplary histogram produced by the luminance histogram generation unit 57 when the dynamic range expansion processing is not executed on the taken image in which the pixel output value of the G pixel exceeds the saturation level T. In (a) and (b) of Fig. 10, the abscissa axis represents the luminance (256 tones from 0 to 255, i.e., 8 bits) while the ordinate axis represents the frequency of pixel occurrence (from 0 to 1 (= 100%)).

As apparent from the histogram illustrated in (b) of Fig. 10, pixel occurrence is observed near the maximum luminance (255) and overexposure occurs when the dynamic range expansion processing is not executed. In contrast, as apparent from the histogram illustrated in (a) of Fig. 10, overexposure hardly occurs near the maximum luminance (255) when the dynamic range expansion processing is executed. In this way, the dynamic range expansion processing can suppress the occurrence of overexposure near the maximum luminance.

In the histogram illustrated in (a) of Fig. 10, however, there is a region having few pixels near the maximum luminance (255). This is because the dynamic range has been expanded beyond necessity while no image data is originally present near the maximum luminance. This means the range of all tones (256 tones from 0 to 255) that can be represented by 8-bit RGB is not effectively used. In the second embodiment, the expansion ratio of the dynamic range can be changed, for example, 1.6 times and 1.3 times besides double as in the example above, in order to effectively use the range of all tones that can be represented by 8-bit RGB on a taken image in which the pixel output value of the G pixel exceeds the saturation level T.

In the second embodiment, the CPU block 1043 in the processor 104 sets the expansion ratio of the dynamic range in accordance with user operation. The digital camera according to the second embodiment is thus provided with a user interface for receiving the user operation to designate the expansion ratio of the dynamic range.

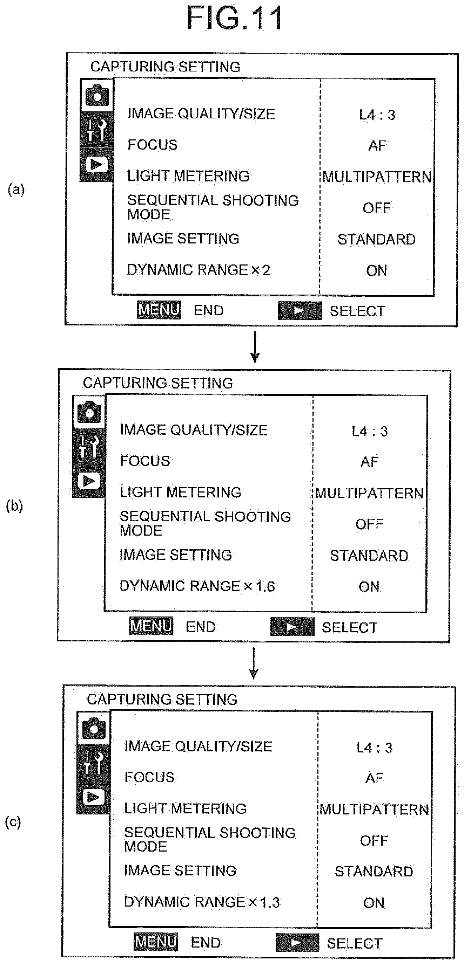

Specifically, in the digital camera according to the second embodiment, a capturing setting screen is displayed on the LCD monitor 9 as illustrated in (a) of Fig. 11, for example, when a user presses the menu switch SW6. In the capturing setting screen illustrated in (a) of Fig. 11, the expansion ratio of the dynamic range can be set to double. To set the expansion ratio of the dynamic range to double, a user selects the item "Dynamic Range x2" on the capturing setting screen by operating the down/macro switch SW10 and the right switch SW8, and presses the OK switch SW12, thereby activating "Dynamic Range x2". As a result, the CPU block 1043, which may be referred to as an expansion ratio setting unit, sets the expansion ratio of the dynamic range to double and outputs a control signal to the second CCD signal processing block 1042, so that processing to double the dynamic range is executed.

To set the expansion ratio of the dynamic range to any expansion ratio other than double, a user operates the left/image confirmation switch SW11, for example, while the capturing setting screen illustrated in (a) of Fig. 11 is displayed on the LCD monitor 9. As a result, the capturing setting screen displayed on the LCD monitor 9 transits from the screen illustrated in (a) of Fig. 11 to the screen illustrated in (b) of Fig. 11. In the capturing setting screen illustrated in (b) of Fig. 11, the expansion ratio of the dynamic range can be set to 1.6 times. To set the expansion ratio of the dynamic range to 1.6 times, a user selects the item "Dynamic Range ×1.6" on the capturing setting screen by operating the down/macro switch SW10 and the right switch SW8 and presses the OK switch SW12, thereby activating "Dynamic Range ×1.6". As a result, the CPU block 1043 sets the expansion ratio of the dynamic range to 1.6 times and outputs a control signal to the second CCD signal processing block 1042, so that processing to expand the dynamic range 1.6 times is executed.

To set the expansion ratio of the dynamic range to 1.3 times, a user operates the left/image confirmation switch SW11, for example, while the capturing setting screen illustrated in (b) of Fig. 11 is displayed on the LCD monitor 9. As a result, the capturing setting screen displayed on the LCD monitor 9 transits from the screen illustrated in (b) of Fig. 11 to the screen illustrated in (c) of Fig. 11. In the capturing setting screen illustrated in (c) of Fig. 11, the expansion ratio of the dynamic range can be set to 1.3 times. To set the expansion ratio of the dynamic range to 1.3 times, a user selects the item "Dynamic Range ×1.3" on the capturing setting screen by operating the down/macro switch SW10 and the right switch SW8 and presses the OK switch SW12, thereby activating "Dynamic Range ×1.3". As a result, the CPU block 1043 sets the expansion ratio of the dynamic range to 1.3 times and outputs a control signal to the second CCD signal processing block 1042, so that processing to expand the dynamic range 1.3 times is executed.

The digital camera according to the second embodiment enables setting of the expansion ratio of the dynamic range by switching the ratio among three stages of double, 1.6 times, and 1.3 times in accordance with the user operation as described above. The switching the ratio among three stages is an example. The ratio may be switched between two stages or four or more stages as multiple stage switching.

For example, when an extremely bright area is included in the background of a subject that a user wants to capture, the user sets the expansion ratio of the dynamic range low. When a user confirms a histogram, which is produced by the luminance histogram generation unit 57 as illustrated in Fig. 10A, displayed on the LCD monitor 9, and finds that a region having few pixels is present near the maximum luminance on the basis of the currently set expansion ratio of the dynamic range, the user sets the expansion ratio of the dynamic range lower than the currently set expansion ratio. As a result, the dynamic range can be expanded by effectively using the range of all tones that can be represented by 8-bit RGB.

When the expansion ratio of the dynamic range is changed, the tone compression unit 64 of the D range expansion processing unit 51 compresses the luminance (Y) data (the maximum value is 8190) expanded to 14-bit data to 12-bit data (the maximum value is 4095) with the compression ratio corresponding to the changed expansion ratio of the dynamic range.

Specifically, the bit compression conversion characteristic for tone compression, which is illustrated in (a) or (b) of Fig. 8, is preliminarily set for each of a plurality of settable expansion ratios of the dynamic range. The tone compression unit 64 stores therein the bit compression conversion characteristics in association with the expansion ratios of the dynamic range. When the CPU block 1043 sets the expansion ratio of the dynamic range, the tone compression unit 64 reads out the bit compression conversion characteristic corresponding to the set expansion ratio of the dynamic range and compresses the luminance (Y) data expanded to 14-bit data to 12-bit data in accordance with the conversion characteristic. In the bit compression conversion characteristic corresponding to the 1.6-time expansion ratio of the dynamic range, 6826 of 14-bit data is compressed to 4095, which is the maximum of 12-bit data. In the bit compression conversion characteristic corresponding to the 1.3-time expansion ratio of the dynamic range, 5461 of 14-bit data is compressed to 4095, which is the maximum of 12-bit data.

With the digital camera according to the second embodiment, the expansion ratio of the dynamic range can be changed in accordance with the user operation as described above. As a result, the dynamic range can be expanded by effectively using the range of all tones that can be represented by 8-bit RGB.

Third Embodiment

A digital camera according to a third embodiment of the present invention is described below. In the third embodiment, the CPU block 1043 in the processor 104 analyzes a histogram produced by the luminance histogram generation unit 57 and automatically (without user operation) sets the expansion ratio of the dynamic range in accordance with the analysis result. The basic structure of the digital camera and the basic operation of the dynamic range expansion processing are the same as those of the first embodiment and the same descriptions as those of the first embodiment are omitted. The following description is made only on the features of the third embodiment.

In the digital camera according to the third embodiment, the CPU block 1043 in the processor 104 sequentially detects the frequency of pixel occurrence in the histogram produced by the luminance histogram generation unit 57 from the maximum luminance side toward a lower luminance side. The CPU block 1043 specifies the position at which the frequency of pixel occurrence exceeds a predetermined specified value in the histogram and sets the expansion ratio of the dynamic range so as to set the position as a new maximum luminance position.

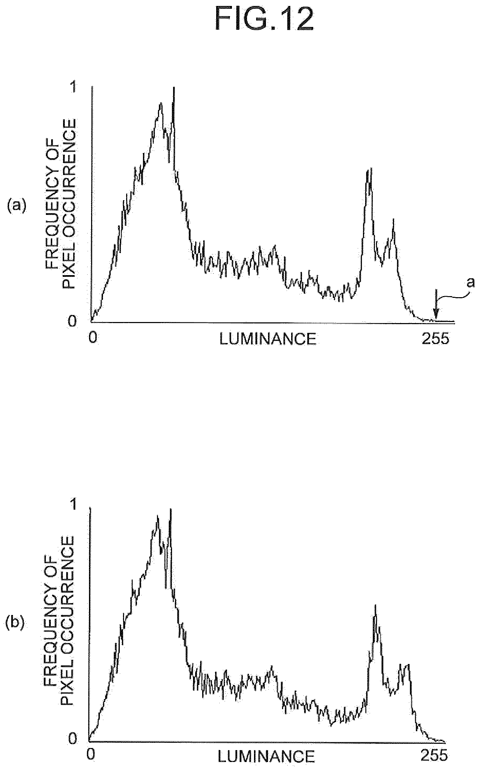

In (a) of Fig. 12, illustrated is an exemplary histogram produced by the luminance histogram generation unit 57 when the dynamic range expansion processing to double the dynamic range is executed on a taken image in which the pixel output value of the G pixel exceeds the saturation level T. In (a) of Fig. 12, the abscissa axis represents the luminance (256 tones from 0 to 255, i.e., 8 bits) while the ordinate axis represents the frequency of pixel occurrence (from 0 to 1 (= 100%)).

The CPU block 1043 counts the frequency of pixel occurrence on a luminance value basis in the histogram as illustrated in (a) of Fig. 12 from the maximum luminance (255) side toward the lower luminance side. The CPU block 1043 sets the expansion ratio of the dynamic range so as to set the position (point) at which the counted frequency of pixel occurrence near the maximum luminance (255) is equal to or more than the predetermined specified value (e.g., 0.01) as a new maximum value of luminance (maximum luminance) after the expansion of the dynamic range. Specifically, the CPU block 1043 sets the expansion ratio of the dynamic range such that the expansion range extends up to the position at which the counted frequency of pixel occurrence is equal to or more than the predetermined specified value when counting the frequency of pixel occurrence from the maximum luminance (255) side toward the lower luminance side in the histogram as illustrated in (a) of Fig. 12.

A position indicated with the arrow a near the maximum luminance (255) in the histogram of (a) of Fig. 12 is a position (point) at which the frequency of pixel occurrence is equal to or more than the specified value. In this case, the tone compression unit 64 of the D range expansion processing unit 51 compresses the luminance (Y) data expanded to 14-bit data to 12-bit data using the bit compression conversion characteristic by which the point indicated with the arrow a is converted to the maximum (4095) when 14-bit data is compressed and converted to 12-bit data.

In (b) of Fig. 12, illustrated is an exemplary histogram produced by the luminance histogram generation unit 57 when the dynamic range expansion processing is executed with the expansion ratio of the dynamic range newly set by the CPU block 1043. In (b) of Fig. 12, the abscissa axis represents the luminance (256 tones from 0 to 255, i.e., 8 bits) while the ordinate axis represents the frequency of pixel occurrence (from 0 to 1 (= 100%)).

In the histogram illustrated in (b) of Fig. 12, pixels occur up to the maximum luminance (255) as compared with the histogram illustrated in (a) of Fig. 12. It is apparent that the range of all tones that can be represented by 8-bit RGB is effectively used.

While the specified value as a threshold of the frequency of pixel occurrence is 0.01 in the description above, the specified value is not limited to this value. The specified value may be equal to or more than zero. When the specified value is equal to or more than zero, a maximum of the luminance (the maximum luminance (255)) detected when the expansion ratio of the dynamic range is double is the maximum of the final dynamic range.

In the digital camera according to the third embodiment, the CPU block 1043 automatically sets the expansion ratio of the dynamic range in accordance with the analysis result of the histogram as described above. As a result, user operation load is reduced and the dynamic range can be expanded by effectively using the range of all tones that can be represented by 8-bit RGB.

Fourth Embodiment

A digital camera according to a fourth embodiment of the present invention is described below. In the fourth embodiment, the CPU block 1043 analyzes the histogram produced by the luminance histogram generation unit 57 and automatically sets the expansion ratio of the dynamic range in the same manner as the third embodiment. The fourth embodiment, however, employs a specific technique for setting the expansion ratio differing from that of the third embodiment. The basic structure of the digital camera and the basic operation of the dynamic range expansion processing are the same as those of the first embodiment and the same descriptions as those of the first embodiment are omitted. The following description is made only on the features of the fourth embodiment.

In the digital camera according to the fourth embodiment, the CPU block 1043 in the processor 104 counts the frequency of pixel occurrence in the histogram produced by the luminance histogram generation unit 57 from a lower luminance side toward the maximum luminance side. The CPU block 1043 specifies a point at which the counted value reaches a predetermined rate with respect to all counted values obtained when the frequency of pixel occurrence is counted over the entire luminance region in the histogram and sets the expansion ratio of the dynamic range so as to set the position as a new maximum luminance position of the histogram.

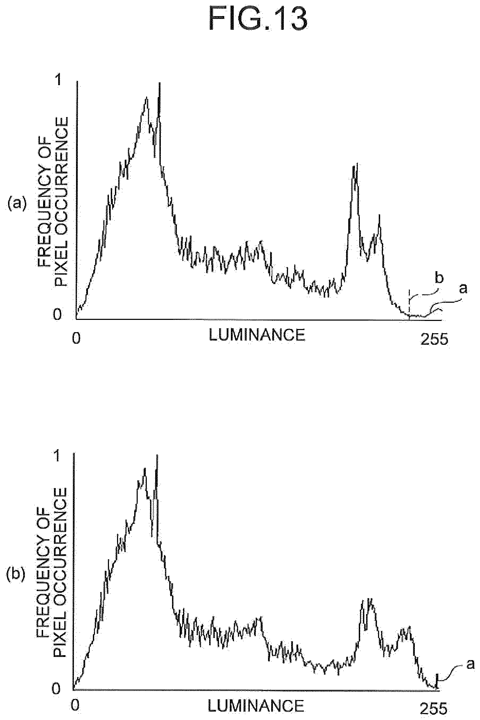

In (a) of Fig. 13, illustrated is an exemplary histogram produced by the luminance histogram generation unit 57 when the dynamic range expansion processing to double the dynamic range is executed on a taken image in which the pixel output value of the G pixel exceeds the saturation level T. In this case, the taken image includes a subject emitting high luminance light in a tiny area. Therefore, in the histogram illustrated in (a) of Fig. 13, pixels corresponding to the subject emitting high luminance light appear near the maximum luminance (255) as indicated with the allow a. In (a) of Fig. 13, the abscissa axis represents the luminance (256 tones from 0 to 255, i.e., 8 bits) while the ordinate axis represents the frequency of pixel occurrence (from 0 to 1 (= 100%)).

In the digital camera according to the fourth embodiment, the CPU block 1043 counts the frequency of pixel occurrence from the lower luminance side toward the maximum luminance (255) side in the histogram as illustrated in (a) of Fig. 13 on a luminance value basis. The CPU block 1043 sets the expansion ratio of the dynamic range so as to set the position (point) at which the rate of the counted value of the frequency of pixel occurrence counted from the lower luminance side with respect to all counted values obtained when the frequency of pixel occurrence is counted over the entire luminance region in the histogram reaches the predetermined rate (e.g., 98%) as a new maximum of the luminance (maximum luminance) after the expansion of the dynamic range. Specifically, the CPU block 1043 sets the expansion ratio of the dynamic range such that the expansion range extends to the position at which the rate of the counted value of the frequency of pixel occurrence counted from the lower luminance side with respect to all counted values in the entire histogram reaches the predetermined rate, on the histogram as illustrated in (a) of Fig. 13.

In the histogram of (a) of Fig. 13, the position indicated with b is the position (point) at which the rate of the counted value of the frequency of pixel occurrence counted from the lower luminance side reaches 98% of all the counted values. In this case, the tone compression unit 64 of the D range expansion processing unit 51 compresses the luminance (Y) data expanded to 14-bit data to 12-bit data using the bit compression conversion characteristic by which the point indicated with b is converted to the maximum (4095) when 14-bit data is compressed and converted to 12-bit data.

When a new maximum of the luminance (maximum luminance) is determined on the histogram of (a) of Fig. 13 using the method described in the third embodiment, the position indicated with a is determined as the position of the maximum luminance because the frequency of pixel occurrence is high at the position indicated with a, at which pixels corresponding to the subject emitting high luminance light appear, in (a) of Fig. 13. As a result, the expansion ratio of the dynamic range remains almost unchanged, i.e., nearly double. It is difficult to effectively use all the range of usable tones. In contrast, when a new maximum of the luminance (maximum luminance) is determined using the method of the fourth embodiment, the expansion ratio of the dynamic range is changed to an optimum value even when an image includes a subject emitting high luminance light. As a result, all the range of usable tones can be effectively used.

In (b) of Fig. 13, illustrated is an exemplary histogram produced by the luminance histogram generation unit 57 when the dynamic range expansion processing is executed with the expansion ratio of the dynamic range newly set by the CPU block 1043. In (b) of Fig. 13, the abscissa axis represents the luminance (256 tones from 0 to 255, i.e., 8 bits) while the ordinate axis represents the frequency of pixel occurrence (from 0 to 1 (= 100%)).

In the histogram illustrated in (b) of Fig. 13, pixels occur up to the maximum luminance (255) as compared with the histogram illustrated in (a) of Fig. 13. It is apparent that the range of all tones that can be represented by 8-bit RGB is effectively used. At the position indicated with a in (b) of Fig. 13, the pixels corresponding to taken images of subjects emitting high luminance light are saturated. Even though the pixels are saturated, images represented by the pixels look natural with no deterioration in image quality.

In the digital camera according to the fourth embodiment, the CPU block 1043 automatically sets the expansion ratio of the dynamic range in accordance with the analysis result of the histogram as described above. As a result, user operation load is reduced and the dynamic range can be expanded by effectively using the range of all tones that can be represented by 8-bit RGB. In addition, pixel output values corresponding to subjects emitting high luminance light, which will not look unnatural even when saturated, are saturated. As a result, the dynamic range can be effectively expanded in a range excluding subjects emitting high luminance light.

In the digital cameras according to the first to the fourth embodiments, the function of the D range expansion processing unit 51 can be achieved by the control program stored in the ROM 108, for example. The program that achieves the function of the D range expansion processing unit 51 may be recorded and provided in a storage medium readable by a computer in a format installable in or a file executable by the computer. The examples of the storage medium include a compact disk ROM (CD-ROM), a flexible disk (FD), a CD-recordable (CD-R), and a digital versatile disk (DVD). The program that achieves the function of the D range expansion processing unit 51 may be stored in a computer coupled to a network such as the Internet, and be provided by being downloaded through the network. The program that achieves the function of the D range expansion processing unit 51 may be provided or distributed through a network such as the Internet.

The program that achieves the function of the D range expansion processing unit 51 has a module structure including the correction coefficient calculation unit 61, the RGB-YUV pre-conversion unit 62, the correction processing unit 63, the tone compression unit 64, and the YUV-RGB conversion unit 65. In actual hardware, the CPU block 1043 in the processor 104 reads the program from the ROM 108 and executes the program, thereby providing the aforementioned components in the second CCD signal processing block 1042.

According to the embodiments, the dynamic range is expanded by correcting the luminance data of YUV data converted from RGB data. As a result, the dynamic range can be expanded through one-time image capturing without losing the chroma balance and high-quality images can be taken.

Although the invention has been described with respect to specific embodiments for a complete and clear disclosure, the appended claims are not to be thus limited but are to be construed as embodying all modifications and alternative constructions that may occur to one skilled in the art that fairly fall within the scope of the appended claims.

**Claims**

1. An image capturing apparatus, comprising:

   an image capturing device (101) configured to convert a subject image received on a light receiving surface through an optical system into an electrical signal, the light receiving surface having a plurality of pixels, the image capturing device (101) being provided with a color separation filter made up of filters of multiple colors disposed in front of the respective pixels of the light receiving surface;
   a correction coefficient calculation unit (61) configured to calculate a correction coefficient when an output value of a first pixel disposed with a first filter of a specific color among the multiple colors reaches a saturation level, the correction coefficient being calculated using an output value of a second pixel being around the first pixel and disposed with a second filter of a color other than the specific color and a ratio between a sensitivity characteristic of the first filter and a sensitivity characteristic of the second filter;
   a first conversion unit (62) configured to convert RGB data into YUV data having luminance data and color difference data, the RGB data including the output value of the first pixel and the output value of the second pixel;
   a correction processing unit (63) configured to multiply the luminance data of the YUV data by the correction coefficient and expand the luminance data from data of a first bit number to data of a second bit number; and
   a tone compression unit (64) configured to compress the expanded luminance data to data of the first bit number.

2. The image capturing apparatus according to claim 1, further comprising a second conversion unit (65) configured to convert YUV data having the compressed luminance data and the color difference data into RGB data.

3. The image capturing apparatus according to claim 1 or 2, wherein the correction coefficient calculation unit (61) calculates the correction coefficient such that a value of the luminance data after being multiplied by the correction coefficient is equal to or more than a value of the luminance data before being multiplied by the correction coefficient.

4. The image capturing apparatus according to any one of claims 1 to 3, wherein
   the correction processing unit (63) expands the luminance data from the data of the first bit number to the data of the second bit number while a tone value of the luminance data is maintained when the output value of the first pixel does not reach the saturation level, and
   the tone compression unit (64) performs compression in such a manner that a compression ratio for the luminance data when the output value of the first pixel does not reach the saturation level is smaller than a compression ratio for the luminance data when the output value of the first pixel reaches the saturation level.

5. The image capturing apparatus according to claim 4, wherein the compression ratio for the luminance data when the output value of the first pixel does not reach the saturation level is a compression ratio that causes the tone value of the luminance data before compression to be approximately equal to the tone value of the luminance data after compression.

6. The image capturing apparatus according to any one of claims 1 to 5, wherein the correction coefficient calculation unit (61) calculates the correction coefficient using an average of output values of the second pixels being around the first pixel and disposed with the second filter of the same color other than the specific color and the ratio between the sensitivity characteristic of the first filter and the sensitivity characteristic of the second filter, when the output value of the first pixel reaches the saturation level.

7. The image capturing apparatus according to any one of claims 1 to 6, further comprising an expansion ratio setting unit (1043) configured to set an expansion ratio of a dynamic range, wherein
   the tone compression unit (64) compresses the expanded luminance data to the data of the first bit number using a compression ratio corresponding to the expansion ratio of the dynamic range set by the expansion ratio setting unit (1043).

8. The image capturing apparatus according to claim 7, wherein the tone compression unit (64) has a plurality of compression conversion characteristics in which correspondence between the data of the second bit number and the data of the first bit number is defined for each of a plurality of expansion ratios of the dynamic range, and compresses the expanded luminance data to the data of the first bit number in accordance with the compression conversion characteristic corresponding to the expansion ratio set by the expansion ratio setting unit (1043).

9. The image capturing apparatus according to claim 7 or 8, further comprising a user interface configured to receive user operation for designating the expansion ratio of the dynamic range, wherein
the expansion ratio setting unit (1043) sets the expansion ratio of the dynamic range in accordance with the user operation received by the user interface.

10. The image capturing apparatus according to claim 7 or 8, further comprising a histogram generation unit (57) configured to produce a histogram representing a frequency of pixel occurrence in a range from a low luminance to a maximum luminance of an image, wherein
the expansion ratio setting unit (1043) sets the expansion ratio of the dynamic range so that a position at which the frequency of pixel occurrence is equal to or more than a predetermined specified value becomes a new position of the maximum luminance in the histogram, when the frequency of pixel occurrence is detected from a maximum luminance side toward a low luminance side in the histogram.

11. The image capturing apparatus according to claim 7 or 8, further comprising a histogram generation unit (57) configured to produce a histogram representing a frequency of pixel occurrence in a range from a low luminance to a maximum luminance of an image, wherein
the expansion ratio setting unit (1043) sets the expansion ratio of the dynamic range so that a position at which a counted value of the frequency of pixel occurrence counted from a low luminance side toward a maximum luminance side in the histogram reaches a predetermined rate with respect to a counted value obtained when the frequency of pixel occurrence is counted over the entire luminance region of the histogram becomes a new position of the maximum luminance in the histogram.

12. An image capturing method executed in an image capturing apparatus that includes an image capturing device (101) configured to convert a subject image received on a light receiving surface through an optical system into an electrical signal, the light receiving surface having a plurality of pixels, the image capturing device (101) being provided with a color separation filter made up of filters of multiple colors disposed in front of the respective pixels of the light receiving surface, the image capturing method comprising:

calculating a correction coefficient when an output value of a first pixel disposed with a first filter of a specific color among the multiple colors reaches a saturation level, the correction coefficient being calculated using an output value of a second pixel being around the first pixel and disposed with a second filter of a color other than the specific color and a ratio between a sensitivity characteristic of the first filter and a sensitivity characteristic of the second filter;
converting RGB data into YUV data having luminance data and color difference data, the RGB data including the output value of the first pixel and the output value of the second pixel;
multiplying the luminance data of the YUV data by the correction coefficient and expanding the luminance data from data of a first bit number to data of a second bit number; and
compressing the expanded luminance data to data of the first bit number.

**Patentansprüche**

1. Bilderfassungseinrichtung, die Folgendes umfasst:

eine Bilderfassungsvorrichtung (101), die dazu ausgelegt ist, ein Motivbild, das über ein optisches System auf einer Lichtaufnahmefläche empfangen wurde, in ein elektrisches Signal umzuwandeln, wobei die Lichtaufnahmefläche eine Vielzahl von Pixeln aufweist, wobei die Bilderfassungsvorrichtung (101) mit einem Farbtrennfilter versehen ist, der aus Filtern mehrerer Farben besteht, die vor den jeweiligen Pixeln der Lichtaufnahmefläche angeordnet sind;
eine Korrekturkoeffizientenberechnungseinheit (61), die dazu ausgelegt ist, einen Korrekturkoeffizienten zu berechnen, wenn ein Ausgangswert eines ersten Pixels, das an einem ersten Filter einer spezifischen Farbe unter den vielen Farben angeordnet ist, ein Sättigungsniveau erreicht, wobei der Korrekturkoeffizient unter Verwendung eines Ausgangswerts eines zweiten Pixels, das das erste Pixel umgibt und an einem zweiten Filter einer anderen Farbe als der spezifischen Farbe angeordnet ist, und eines Verhältnisses zwischen einer Empfindlichkeitscharakteristik des ersten Filters und einer Empfindlichkeitscharakteristik des zweiten Filters berechnet wird;

eine erste Umwandlungseinheit (62), die dazu ausgelegt ist, RGB-Daten in YUV-Daten, die Luminanzdaten und Farbdifferenzdaten aufweisen, umzuwandeln, wobei die RGB-Daten den Ausgangswert des ersten Pixels und den Ausgangswert des zweiten Pixels beinhalten;

eine Korrekturverarbeitungseinheit (63), die dazu ausgelegt ist, die Luminanzdaten der YUV-Daten mit dem Korrekturkoeffizienten zu multiplizieren und die Luminanzdaten von Daten einer ersten Bitanzahl zu Daten einer zweiten Bitanzahl zu erweitern; und

eine Farbtonkomprimierungseinheit (64), die dazu ausgelegt ist, die erweiterten Luminanzdaten zu Daten der ersten Bitanzahl zu komprimieren.

2.  Bilderfassungseinrichtung nach Anspruch 1, die ferner eine zweite Umwandlungseinheit (65) umfasst, die dazu ausgelegt ist, YUV-Daten, die die komprimierten Luminanzdaten und die Farbdifferenzdaten aufweisen, in RGB-Daten umzuwandeln.

3.  Bilderfassungseinrichtung nach Anspruch 1 oder 2, wobei die Korrekturkoeffizientenberechnungseinheit (61) den Korrekturkoeffizienten derart berechnet, dass ein Wert der Luminanzdaten, nachdem er mit dem Korrekturkoeffizienten multipliziert wurde, einem Wert der Luminanzdaten, bevor er mit dem Korrekturkoeffizienten multipliziert wurde, gleich oder größer als dieser ist.

4.  Bilderfassungseinrichtung nach einem der Ansprüche 1 bis 3, wobei

die Korrekturverarbeitungseinheit (63) die Luminanzdaten von den Daten der ersten Bitanzahl zu den Daten der zweiten Bitanzahl erweitert, während ein Farbtonwert der Luminanzdaten beibehalten wird, wenn der Ausgangswert des ersten Pixels das Sättigungsniveau nicht erreicht, und

die Farbtonkomprimierungseinheit (64) eine Komprimierung in einer Weise durchführt, dass ein Komprimierungsverhältnis für die Luminanzdaten, wenn der Ausgangswert des ersten Pixels das Sättigungsniveau nicht erreicht, kleiner ist als ein Komprimierungsverhältnis für die Luminanzdaten, wenn der Ausgangswert des ersten Pixels das Sättigungsniveau erreicht.

5.  Bilderfassungseinrichtung nach Anspruch 4, wobei das Komprimierungsverhältnis für die Luminanzdaten, wenn der Ausgangswert des ersten Pixels das Sättigungsniveau nicht erreicht, ein Komprimierungsverhältnis ist, das bewirkt, dass der Farbtonwert der Luminanzdaten vor der Komprimierung dem Farbtonwert der Luminanzdaten nach der Komprimierung ungefähr gleich ist.

6.  Bilderfassungseinrichtung nach einem der Ansprüche 1 bis 5, wobei die Korrekturkoeffizientenberechnungseinheit (61) den Korrekturkoeffizienten unter Verwendung eines Mittelwerts von Ausgangswerten der zweiten Pixel, die das erste Pixel umgeben und am zweiten Filter derselben Farbe außer der spezifischen Farbe angeordnet sind, und des Verhältnisses zwischen der Empfindlichkeitscharakteristik des ersten Filters und der Empfindlichkeitscharakteristik des zweiten Filters berechnet, wenn der Ausgangswert des ersten Pixels das Sättigungsniveau erreicht.

7.  Bilderfassungseinrichtung nach einem der Ansprüche 1 bis 6, die ferner eine Erweiterungsverhältniseinstelleinheit (1043) umfasst, die dazu ausgelegt ist, ein Erweiterungsverhältnis eines dynamischen Bereichs einzustellen, wobei die Farbtonkomprimierungseinheit (64) die erweiterten Luminanzdaten unter Verwendung eines Komprimierungsverhältnisses, das dem von der Erweiterungsverhältniseinstelleinheit (1043) eingestellten Erweiterungsverhältnis des dynamischen Bereichs entspricht, zu Daten der ersten Bitanzahl komprimiert.

8.  Bilderfassungseinrichtung nach Anspruch 7, wobei die Farbtonkomprimierungseinheit (64) eine Vielzahl von Komprimierungsumwandlungscharakteristika aufweist, bei denen eine Entsprechung zwischen den Daten der zweiten Bitanzahl und den Daten der ersten Bitanzahl für jedes einer Vielzahl von Erweiterungsverhältnissen des dynamischen Bereichs definiert ist, und die erweiterten Luminanzdaten gemäß der Komprimierungsumwandlungscharakteristik zu Daten der ersten Bitanzahl komprimiert, die dem von der Erweiterungsverhältniseinstelleinheit (1043) eingestellten Erweiterungsverhältnis entspricht.

9.  Bilderfassungseinrichtung nach Anspruch 7 oder 8, die ferner eine Benutzerschnittstelle umfasst, die dazu ausgelegt ist, einen Benutzervorgang zum Benennen des Erweiterungsverhältnisses des dynamischen Bereichs zu empfangen, wobei

die Erweiterungsverhältniseinstelleinheit (1043) das Erweiterungsverhältnis des dynamischen Bereichs gemäß dem Benutzervorgang, der von der Benutzerschnittstelle empfangen wurde, einstellt.

10. Bilderfassungseinrichtung nach Anspruch 7 oder 8, die ferner eine Histogrammerzeugungseinheit (57) umfasst, die dazu ausgelegt ist, ein Histogramm anzufertigen, das eine Häufigkeit des Auftretens von Pixeln in einem Bereich zwischen einer niedrigen Luminanz und einer maximalen Luminanz eines Bildes repräsentiert, wobei
die Erweiterungsverhältniseinstelleinheit (1043) das Erweiterungsverhältnis des dynamischen Bereichs derart einstellt, dass eine Position, in der die Häufigkeit des Auftretens von Pixeln gleich oder höher ist als ein vorbestimmter festgelegter Wert, zu einer neuen Position der maximalen Luminanz im Histogramm wird, wenn die Häufigkeit des Auftretens von Pixeln von einer Seite maximaler Luminanz zu einer Seite niedriger Luminanz im Histogramm detektiert wird.

11. Bilderfassungseinrichtung nach Anspruch 7 oder 8, die ferner eine Histogrammerzeugungseinheit (57) umfasst, die dazu ausgelegt ist, ein Histogramm anzufertigen, das eine Häufigkeit des Auftretens von Pixeln in einem Bereich zwischen einer niedrigen Luminanz und einer maximalen Luminanz eines Bildes repräsentiert, wobei
die Erweiterungsverhältniseinstelleinheit (1043) das Erweiterungsverhältnis des dynamischen Bereichs derart einstellt, dass eine Position, in der ein gezählter Wert der Häufigkeit des Auftretens von Pixeln, der von einer Seite niedriger Luminanz zu einer Seite maximaler Luminanz im Histogramm gezählt wird, mit Bezug auf einen gezählten Wert, der erhalten wird, wenn die Häufigkeit des Auftretens von Pixeln über die gesamte Luminanzregion des Histogramms gezählt wird, eine vorbestimmte Rate erreicht, zu einer neuen Position der maximalen Luminanz im Histogramm wird.

12. Bilderfassungsverfahren, das in einer Bilderfassungseinrichtung ausgeführt wird, die eine Bilderfassungsvorrichtung (101) beinhaltet, die dazu ausgelegt ist, ein Motivbild, das über ein optisches System auf einer Lichtaufnahmefläche empfangen wurde, in ein elektrisches Signal umzuwandeln, wobei die Lichtaufnahmefläche eine Vielzahl von Pixeln aufweist, wobei die Bilderfassungsvorrichtung (101) mit einem Farbtrennfilter versehen ist, der aus Filtern mehrerer Farben besteht, die vor den jeweiligen Pixeln der Lichtaufnahmefläche angeordnet sind, wobei das Bilderfassungsverfahren Folgendes umfasst:

Berechnen eines Korrekturkoeffizienten, wenn ein Ausgangswert eines ersten Pixels, das an einem ersten Filter einer spezifischen Farbe unter den vielen Farben angeordnet ist, ein Sättigungsniveau erreicht, wobei der Korrekturkoeffizient unter Verwendung eines Ausgangswerts eines zweiten Pixels, das das erste Pixel umgibt und an einem zweiten Filter einer anderen Farbe als der spezifischen Farbe angeordnet ist, und eines Verhältnisses zwischen einer Empfindlichkeitscharakteristik des ersten Filters und einer Empfindlichkeitscharakteristik des zweiten Filters berechnet wird;
Umwandeln von RGB-Daten in YUV-Daten, die Luminanzdaten und Farbdifferenzdaten aufweisen, wobei die RGB-Daten den Ausgangswert des ersten Pixels und den Ausgangswert des zweiten Pixels beinhalten;
Multiplizieren der Luminanzdaten der YUV-Daten mit dem Korrekturkoeffizienten und Erweitern der Luminanzdaten von Daten einer ersten Bitanzahl zu Daten einer zweiten Bitanzahl und
Komprimieren der erweiterten Luminanzdaten zu Daten der ersten Bitanzahl.

## Revendications

1. Appareil de capture d'image, comprenant :

un dispositif de capture d'image (101) configuré pour convertir une image de sujet reçue sur une surface réceptrice de lumière par le biais d'un système optique en signal électrique, la surface réceptrice de lumière ayant une pluralité de pixels, le dispositif de capture d'image (101) étant muni d'un filtre de séparation de couleurs constitué de filtres de plusieurs couleurs disposés devant les pixels respectifs de la surface réceptrice de lumière ;
une unité de calcul de coefficient de correction (61) configurée pour calculer un coefficient de correction lorsqu'une valeur de sortie d'un premier pixel disposé avec un premier filtre d'une couleur spécifique parmi les plusieurs couleurs atteint un niveau de saturation, le coefficient de correction étant calculé à l'aide d'une valeur de sortie d'un deuxième pixel autour du premier pixel est disposé avec un deuxième filtre d'un couleur autre que la couleur spécifique et d'un rapport entre une caractéristique de sensibilité du premier filtre et une caractéristique de sensibilité du deuxième filtre ;
une première unité de conversion (62) configurée pour convertir des données RGB en données YUV ayant des données de luminance et des données de différence de couleur, les données RGB comprenant la valeur de sortie du premier pixel et la valeur de sortie du deuxième pixel ;
une unité de traitement de correction (63) configurée pour multiplier les données de luminance des données YUV par le coefficient de correction et étendre les données de luminance à partir de données d'un premier nombre de bits à un deuxième nombre de bits ; et
une unité de compression de tonalité (64) configurée pour compresser les données de luminance étendues en données du premier nombre de bits.

2. Appareil de capture d'image selon la revendication 1, comprenant en outre une deuxième unité de conversion (65) configurée pour convertir des données YUV ayant les données de luminance compressées et les données de différence de couleur en données RGB.

3. Appareil de capture d'image selon la revendication 1 ou 2, dans lequel l'unité de calcul de coefficient de correction (61) calcule le coefficient de correction de sorte qu'une valeur des données de luminance après multiplication par le coefficient de correction soit supérieure ou égale à une valeur des données de luminance avant multiplication par le coefficient de correction.

4. Appareil de capture d'image selon l'une quelconque des revendications 1 à 3, dans lequel
l'unité de traitement de correction (63) étend les données de luminance à partir des données du premier nombre de bits au deuxième nombre de bits tandis qu'une valeur de tonalité des données de luminance est maintenue lorsque la valeur de sortie du premier pixel n'atteint pas le niveau de saturation, et
l'unité de compression de tonalité (64) effectue une compression de telle sorte qu'un rapport de compression pour les données de luminance lorsque la valeur de sortie du premier pixel n'atteint pas le niveau de saturation soit plus petit qu'un rapport de compression pour les données de luminance lorsque la valeur de sortie du premier pixel atteint le niveau de saturation.

5. Appareil de capture d'image selon la revendication 4, dans lequel le rapport de compression pour les données de luminance lorsque la valeur de sortie du premier pixel n'atteint pas le niveau de saturation est un rapport de compression qui amène la valeur de tonalité des données de luminance avant compression à être approximativement égale à la valeur de tonalité des données de luminance après compression.

6. Appareil de capture d'image selon l'une quelconque des revendications 1 à 5, dans lequel l'unité de calcul de coefficient de correction (61) calcule le coefficient de correction en utilisant une moyenne des valeurs de sortie des deuxièmes pixels autour du premier pixel et disposés avec le deuxième filtre de la même couleur autre que la couleur spécifique et le rapport entre la caractéristique de sensibilité du premier filtre et la caractéristique de sensibilité du deuxième filtre, lorsque la valeur de sortie du premier pixel atteint le niveau de saturation.

7. Appareil de capture d'image selon l'une quelconque des revendications 1 à 6, comprenant en outre une unité d'établissement de rapport d'extension (1043) configurée pour établir un rapport d'extension d'une plage dynamique, l'unité de compression de tonalité (64) compressant les données de luminance étendues en données du premier nombre de bits en utilisant un rapport de compression correspondant au rapport d'extension de la plage dynamique établi par l'unité d'établissement de rapport d'extension (1043).

8. Appareil de capture d'image selon la revendication 7, dans lequel l'unité de compression de tonalité (64) a une pluralité de caractéristiques de conversion de compression dans lesquelles la correspondance entre les données du deuxième nombre de bits et les données du premier nombre de bits est définie pour chacun d'une pluralité de rapports d'extension de la plage dynamique, et compresse les données de luminance étendues en données du premier nombre de bits en conformité avec la caractéristique de conversion de compression correspondant au rapport d'extension établi par l'unité d'établissement de rapport d'extension (1043).

9. Appareil de capture d'image selon la revendication 7 ou 8, comprenant en outre une interface utilisateur configurée pour recevoir une opération d'utilisateur destinée à désigner le rapport d'extension de la plage dynamique, l'unité d'établissement de rapport d'extension (1043) établissant le rapport d'extension de la plage dynamique en conformité avec l'opération d'utilisateur reçue par l'interface utilisateur.

10. Appareil de capture d'image selon la revendication 7 ou 8, comprenant en outre une unité de génération d'histogramme (57) configurée pour produire un histogramme représentant une fréquence d'occurrence de pixel dans une place allant d'une luminance faible à une luminance maximale d'une image, l'unité d'établissement de rapport d'extension (1043) établissant le rapport d'extension de la plage dynamique de sorte qu'une position à laquelle la fréquence d'occurrence de pixel soit supérieure ou égale à une valeur spécifiée prédéterminée devienne une nouvelle position de la luminance maximale dans l'histogramme, lorsque la fréquence d'occurrence de pixel est détectée d'un côté luminance maximale vers un côté luminance faible dans l'histogramme.

**EP 2 515 543 B1**

**11.** Appareil de capture d'image selon la revendication 7 ou 8, comprenant en outre une unité de génération d'histogramme (57) configurée pour produire un histogramme représentant une fréquence d'occurrence de pixel dans une place allant d'une luminance faible à une luminance maximale d'une image,
l'unité d'établissement de rapport d'extension (1043) établissant le rapport d'extension de la plage dynamique de sorte qu'une position à laquelle une valeur comptée de la fréquence d'occurrence de pixel comptée d'un côté luminance faible vers un côté luminance maximale dans l'histogramme atteint un taux prédéterminé vis-à-vis d'une valeur comptée obtenue lorsque la fréquence d'occurrence de pixel est comptée sur toute la région de luminance de l'histogramme devienne une nouvelle position de la luminance maximale dans l'histogramme.

**12.** Procédé de capture d'image exécuté dans un appareil de capture d'image qui comprend un dispositif de capture d'image (101) configuré pour convertir une image de sujet reçue sur une surface réceptrice de lumière par le biais d'un système optique en signal électrique, la surface réceptrice de lumière ayant une pluralité de pixels, le dispositif de capture d'image (101) étant muni d'un filtre de séparation de couleurs constitué de filtres de plusieurs couleurs disposés devant les pixels respectifs de la surface réceptrice de lumière, le procédé de capture d'image comprenant :

le calcul d'un coefficient de correction lorsqu'une valeur de sortie d'un premier pixel disposé avec un premier filtre d'une couleur spécifique parmi les plusieurs couleurs atteint un niveau de saturation, le coefficient de correction étant calculé à l'aide d'une valeur de sortie d'un deuxième pixel autour du premier pixel et disposé avec un deuxième filtre d'une couleur autre que la couleur spécifique et d'un rapport entre une caractéristique de sensibilité du premier filtre et une caractéristique de sensibilité du deuxième filtre ;
la conversion de données RGB en données YUV ayant des données de luminance et des données de différence de couleur, les données RGB comprenant la valeur de sortie du premier pixel et la valeur de sortie du deuxième pixel ;
la multiplication des données de luminance des données YUV par le coefficient de correction et l'extension des données de luminance à partir de données d'un premier nombre de bits à un deuxième nombre de bits ; et
la compression des données de luminance étendues en données du premier nombre de bits.

# FIG.1A

SW1  SW2

1

# FIG.1B

SW1  SW2  2  5

3

6

4

# FIG.1C

7  10  8  SW13  SW2  SW3  SW1

SW4

SW5

SW7

SW8

SW10

11  9  SW12  SW6  SW9  SW11

# FIG.2

EP 2 515 543 B1

# FIG.3

# FIG.4

# FIG.5

| CAPTURING SETTING | |
|---|---|
| IMAGE QUALITY/SIZE | L4 : 3 |
| FOCUS | AF |
| LIGHT METERING | MULTIPATTERN |
| SEQUENTIAL SHOOTING MODE | OFF |
| IMAGE SETTING | STANDARD |
| DYNAMIC RANGE × 2 | ON |

MENU  END          ▶ SELECT

EP 2 515 543 B1

## FIG.6

SECOND CCD SIGNAL PROCESSING BLOCK 1042

51 D RANGE EXPANSION PROCESSING UNIT

52 WHITE BALANCE CONTROL UNIT

53 DEMOSAICING UNIT

54 TONE CURVE CONVERSION UNIT

55 RGB-YUV CONVERSION UNIT

56 IMAGE SIZE CONVERSION UNIT

57 LUMINANCE HISTOGRAM GENERATION UNIT

58 EDGE ENHANCEMENT UNIT

## FIG.7

51

U DATA/V DATA 12 BITS × 2

RGB 12 BITS × 3

62 RGB-YUV PRE-CONVERSION UNIT

Y DATA 12 BITS

63 CORRECTION PROCESSING UNIT

AFTER CORRECTION Y DATA 14 BITS

64 TONE COMPRESSION UNIT

AFTER TONE COMPRESSION Y DATA 12 BITS

65 YUV-RGB CONVERSION UNIT

61 CORRECTION COEFFICIENT CALCULATION UNIT

D RANGE EXPANSION PROCESSING UNIT

FIG.8

# FIG.9

# FIG.10

# FIG.11

(a)

CAPTURING SETTING

| | |
|---|---|
| IMAGE QUALITY/SIZE | L4 : 3 |
| FOCUS | AF |
| LIGHT METERING | MULTIPATTERN |
| SEQUENTIAL SHOOTING MODE | OFF |
| IMAGE SETTING | STANDARD |
| DYNAMIC RANGE × 2 | ON |

MENU END ▶ SELECT

(b)

CAPTURING SETTING

| | |
|---|---|
| IMAGE QUALITY/SIZE | L4 : 3 |
| FOCUS | AF |
| LIGHT METERING | MULTIPATTERN |
| SEQUENTIAL SHOOTING MODE | OFF |
| IMAGE SETTING | STANDARD |
| DYNAMIC RANGE × 1.6 | ON |

MENU END ▶ SELECT

(c)

CAPTURING SETTING

| | |
|---|---|
| IMAGE QUALITY/SIZE | L4 : 3 |
| FOCUS | AF |
| LIGHT METERING | MULTIPATTERN |
| SEQUENTIAL SHOOTING MODE | OFF |
| IMAGE SETTING | STANDARD |
| DYNAMIC RANGE × 1.3 | ON |

MENU END ▶ SELECT

# FIG.12

# FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009089355 A
- US 20100171842 A1
- WO 2011042229 A1
- US 20110001841 A1

**Non-patent literature cited in the description**

- **F. BANTERLE et al.** *A framework for inverse tone mapping,* vol. 23 (7